(19) **Europäisches Patentamt / European Patent Office / Office européen des brevets**

(11) **EP 4 525 391 A1**

(12) **EUROPEAN PATENT APPLICATION**
published in accordance with Art. 153(4) EPC

(43) Date of publication:
**19.03.2025 Bulletin 2025/12**

(21) Application number: **23815064.3**

(22) Date of filing: **25.05.2023**

(51) International Patent Classification (IPC):
**H04L 41/14** (2022.01) **H04B 7/0413** (2017.01)

(52) Cooperative Patent Classification (CPC):
**G06N 3/08; G06N 20/00; H04B 7/0413; H04L 5/00; H04L 41/14**

(86) International application number:
**PCT/CN2023/096197**

(87) International publication number:
**WO 2023/231881 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.05.2022 CN 202210612064**

(71) Applicant: **Huawei Technologies Co., Ltd.**
**Shenzhen, Guangdong 518129 (CN)**

(72) Inventors:
- **HANG, Haicun**
  **Shenzhen, Guangdong 518129 (CN)**
- **CHEN, Jiaxuan**
  **Shenzhen, Guangdong 518129 (CN)**
- **CHAI, Xiaomeng**
  **Shenzhen, Guangdong 518129 (CN)**
- **SUN, Yan**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **MODEL APPLICATION METHOD AND APPARATUS**

(57) A model application method and an apparatus are provided. The method includes: determining first information based on a received reference signal, where the first information includes data of m ports for the reference signal; and mapping the data of the m ports to an input of a first model based on a correspondence between the m ports and n ports in an input dimension of the first model, to obtain an output of the first model, where both m and n are integers greater than or equal to 1, and m and n are not equal. By using the method and the apparatus in this application, self-adaptation to a port of the reference signal can be implemented, and model storage and training overheads can be reduced.

FIG. 7

## Description

## CROSS-REFERENCE TO RELATED APPLICATIONS

This application claims priority to Chinese Patent Application No. 202210612064.1, filed with the China National Intellectual Property Administration on May 31, 2022 and entitled "MODEL APPLICATION METHOD AND APPARATUS", which is incorporated herein by reference in its entirety.

## TECHNICAL FIELD

This disclosure relates to the field of communication technologies, and in particular, to a model application method and an apparatus.

## BACKGROUND

In a wireless communication network, for example, in a mobile communication network, services supported by the network are increasingly diversified, and therefore, requirements that need to be met are increasingly diversified. For example, the network needs to be capable of supporting ultra-high rates, ultra-low latency, and/or ultra-large connections. This feature makes network planning, network configuration, and/or resource scheduling increasingly complex. In addition, functions of the network are increasingly powerful, for example, a supported spectrum is increasingly high, a higher-order multiple-input multiple-output (multiple-input multiple-output, MIMO) technology is supported, and new technologies such as beamforming and/or beam management are supported. These new requirements, scenarios, and features bring an unprecedented challenge to network planning, operation and maintenance, and efficient operation. To address this challenge, an artificial intelligence technology may be introduced into the wireless communication network, to implement network intelligence. Based on this, how to effectively implement artificial intelligence in the network is a problem worth studying.

## SUMMARY

This disclosure provides a model application method and an apparatus, to implement self-adaptation to a port for a reference signal, and reduce model storage and training overheads.

According to a first aspect, a model application method is provided. The method is performed by a terminal device, or a component (a processor, a chip, or the like) configured in the terminal device, or is performed by a network device, or a component configured in the network device. The method includes: determining first information based on a received reference signal, where the first information includes data of m ports for the reference signal; and mapping the data of the m ports to an input of a first model based on a correspondence between the m ports and n ports in an input dimension of the first model, to obtain an output of the first model, where both m and n are integers greater than or equal to 1, and m and n are not equal.

In the foregoing design, when a quantity of ports for the reference signal is different from a quantity of ports in the input dimension of the first model, data of the port for the reference signal may be self-adaptively input into the first model based on a correspondence between the port for the reference signal and the port in the input dimension of the first model, so that a model corresponding to a configuration of a port of each type of reference signal does not need to be designed, and model training and storage overheads are reduced.

In a possible design, the reference signal is a downlink reference signal, the output of the first model is for determining second information, and the method further includes: sending the second information to a network device.

In a possible design, the mapping the data of the m ports to an input of a first model based on a correspondence between the m ports and n ports in an input dimension of the first model includes: determining a first target port in the n ports based on the correspondence between the m ports and the n ports, where a quantity of first target ports is m; and inputting the data of the m ports into an input corresponding to the first target port of the first model.

In the foregoing design, when a quantity of the n ports in the input dimension of the first model is greater than a quantity of the m ports for the reference signal, a part of the n ports is selected, and is referred to as the first target port. The quantity of first target ports is the same as a value of m. The data of the m ports included in the first information is input into the first target port, so that the data of the port for the reference signal is self-adaptively input into the first model, and the model storage and training overheads are reduced.

In a possible design, the m ports are indexed in a matrix manner, include M1 columns and M2 rows, and use dual polarization directions, and the m ports are represented as (M1, M2, 2); the n ports are indexed in a matrix manner, include N1 columns and N2 rows, and use dual polarization directions, and the n ports are represented as (N1, N2, 2), where M1, M2, N1, and N2 are all integers greater than or equal to 1; and the correspondence between the m ports and the n ports satisfies the following:

in a polarization direction 1: ports (i*M2 to (i+1)*M2-1) in the m ports correspond to ports (i*N2 to i*N2+M2-1) in the n ports; and

in a polarization direction 2: ports (i*M2+M1*M2 to (i+1)*M2-1+M1*M2) in the m ports correspond to ports (i*N2+N1*N2 to i*N2+M2-1+N1*N2) in the n ports, where

i is an integer greater than or equal to 0 and less than or equal to M1-1.

In a possible design, an input of a port other than the first target port in the first model is preset data, or replicated data of the data of the m ports. Optionally, the preset data may be zero.

In the foregoing design, when data filled into another port is the preset data (for example, zero), implementation is easy, and power consumption is low. When data filled into another port is the replicated data of the data corresponding to the first target port, it is equivalent to that a same piece of data is transmitted for a plurality of times, so that precision of data transmission is improved.

In a possible design, the first target port includes a port 0.

The design in which the first target port includes the port 0 is easy to operate and implement.

In a possible design, a quantity of ports in each row of the n ports is greater than or equal to a quantity of ports in each row of the m ports, and a quantity of ports in each column of the n ports is greater than or equal to a quantity of ports in each column of the m ports.

In a possible design, the mapping the data of the m ports to an input of a first model based on a correspondence between the m ports and n ports in an input dimension of the first model includes: determining Y port sets based on the m ports and the n ports, where Y is an integer greater than 1, and at least one of the Y port sets includes n ports; and for the port set that includes the n ports, inputting data corresponding to the n ports included in the port set into an input corresponding to the n ports of the first model.

In the foregoing design, when the n ports in the input dimension of the first model are less than the m ports for the reference signal, in other words, a value of n is less than that of m, the m ports for the reference signal may be divided into Y subpanels, a quantity of ports of the subpanel and indexing and distribution of the ports are the same as a quantity, and indexing and distribution of the n ports in the input dimension of the first model. Optionally, a panel is a physical concept, ports may be distributed in an antenna panel in a specific indexing manner, a subpanel may be considered as a logical concept, and one panel may be divided into at least one subpanel. A manner of dividing the m ports for the reference signal into the Y subpanels is not limited. When data of ports, for the reference signal, corresponding to each of the Y subpanels is respectively input into the n ports in the input dimension of the first model, so that when the quantity of ports for the reference signal is greater than the quantity of ports in the input of the first model, self-adaptation of the data of the ports for the reference signal is implemented, and the model storage and training overheads are reduced.

In a possible design, the m ports are indexed in a matrix manner, include M1 columns and M2 rows, and use dual polarization directions, and the m ports are represented as (M1, M2, 2); the n ports are indexed in a matrix manner, include N1 columns and N2 rows, and use dual polarization directions, and the n ports are represented as (N1, N2, 2), where M1, M2, N1, and N2 are all integers greater than or equal to 1; and for a port set k in the Y port sets, where k is an integer greater than or equal to 0 and less than or equal to Y-1, the correspondence between the m ports and the n ports satisfies the following:

in a polarization direction 1: ports (i*M2+k*N2 to i*M2+k*N2+N2-1) in the m ports correspond to ports (i*N2 to i*N2+N2-1) in the n ports; and
in a polarization direction 2: ports (i*M2+k*N2+M1*M2 to i*M2+k*N2+N2-1+M1*M2) in the m ports correspond to ports (i*N2+N1*N2 to i*N2+N2-1+N1*N2) in the n ports, where
i is an integer greater than or equal to 0 and less than or equal to M1-1.

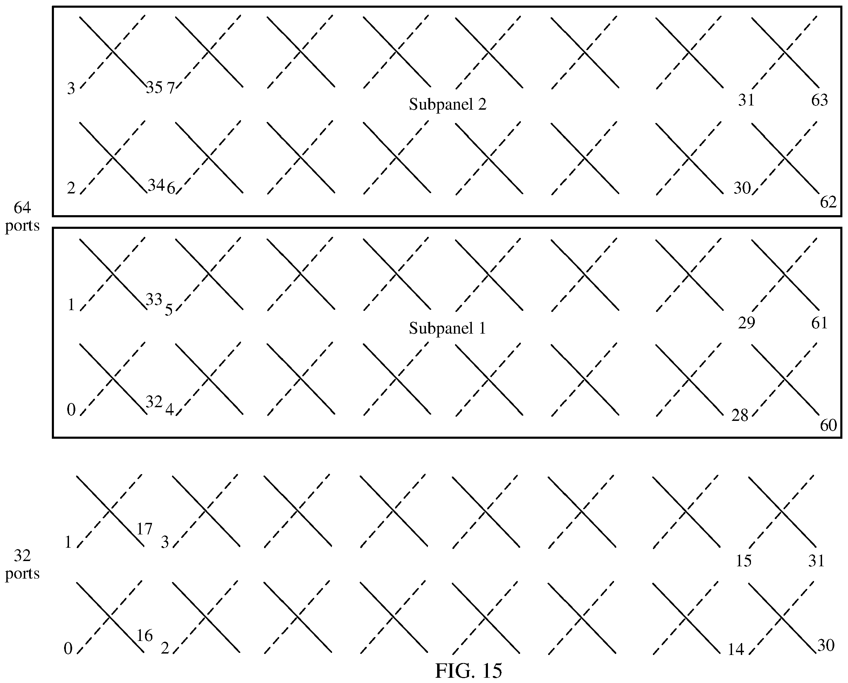

In the foregoing design, the m ports for the reference signal may be divided into Y subpanels in a row first division manner. For an example of the row first division manner, refer to FIG. 15. The division manner is easy to implement, and power consumption is reduced.

In a possible design, the m ports are indexed in a matrix manner, include M1 columns and M2 rows, and use dual polarization directions, and the m ports are represented as (M1, M2, 2); the n ports are indexed in a matrix manner, include N1 columns and N2 rows, and use dual polarization directions, and the n ports are represented as (N1, N2, 2); and for a port set k in the Y port sets, where k is an integer greater than or equal to 0 and less than or equal to Y-1, the correspondence between the m ports and the n ports satisfies the following:

in a polarization direction 1: ports (i*M2+k*N1 to i*M2+k*N1+M2-1) in the m ports correspond to ports (i*N2 to i*N2+M2-1) in the n ports; and
in a polarization direction 2: ports (i*M2+k*N1+M1*M2 to i*M2+k*N1+M2-1+M1*M2) in the m ports correspond to ports (i*N2+N1*N2 to i*N2+M2-1+N1*N2) in the n ports, where
i is an integer greater than or equal to 0 and less than or equal to M1-1.

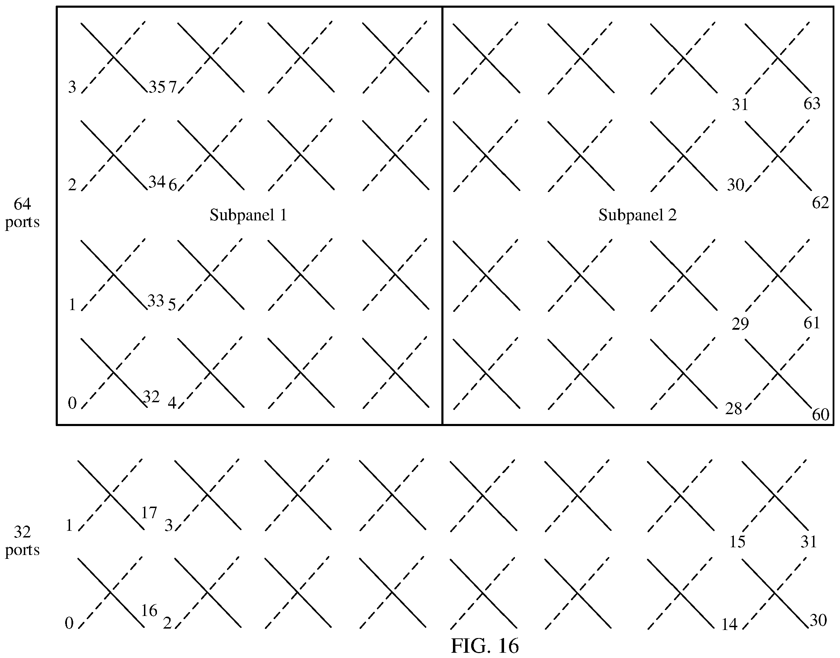

In the foregoing method, the m ports for the reference signal may be divided into Y subpanels in a column first division manner. For an example of the column first division manner, refer to FIG. 16. The division manner is easy to implement, and power consumption is reduced.

In a possible design, the method further includes: sending identification information of the port sets to the network device.

In the foregoing design, in particular, in the design in which the reference signal is divided into the Y subpanels, and each subpanel corresponds to one port set, not only second information corresponding to each subpanel is sent to the network device, but also an identifier of a port set corresponding to each piece of second information may be sent to the network device, so that the network device can further integrate restored channel information.

In a possible design, a quantity of ports in each row of the n ports is less than or equal to a quantity of ports in each row of the m ports, and a quantity of ports in each column of the n ports is less than or equal to a quantity of ports in each column of the m ports.

According to a second aspect, a model application method is provided. The method is performed by a network device or a component configured in the network device. The method includes: receiving second information from a terminal device; determining third information based on a second model and the second information; and processing the third information based on a correspondence between m ports for a downlink reference signal and x ports in an output dimension of the second model, to determine first information, where the first information includes data of the m ports, both m and x are integers greater than or equal to 1, and m and x are not equal.

In the foregoing design, the terminal device may send the second information to the network device, and the network device determines the third information based on the second information and the second model. The third information may be an output of the second model, or may be determined based on the output of the second model. A quantity of the x ports included in the output dimension of the second model and a quantity of n ports in an input dimension of a first model may be the same or different. This is not limited. Because in the design, the network device needs to restore the data of the m ports for the reference signal, when the output dimension of the second model includes the x ports, the third information also includes a quantity of x ports. By using the foregoing design, data that is of the x ports and that is included in the third information may be restored to the data of the m ports for sending the reference signal. The data of the m ports may be considered as downlink channel information corresponding to the m ports, and a restoration model corresponding to each type of reference signal does not need to be set, so that model storage and training overheads are reduced.

In a possible design, the processing the third information based on a correspondence between m ports for a downlink reference signal and x ports in an output dimension of the second model, to determine first information includes: determining a second target port in the x ports based on the correspondence between the m ports and the x ports; and determining the first information based on data that corresponds to the second target port and that is in the third information.

In the foregoing design, for a transmit end, when the m ports for the reference signal are less than the n ports of the first model, the data of the m ports for the reference signal is input into m ports selected from the n ports, where the selected m ports are referred to as first target ports. For a receive end, to be specific, when restoring the downlink channel information, the network device may further select data, of m ports, in the third information corresponding to the output of the second model, where the third information includes the data of the x ports, the m ports that is further selected may be referred to as second target ports, and the data, of the m ports, selected from the third information or information that is obtained by processing the selected data of the m ports may be referred to as the first information, to restore the downlink channel information.

In a possible design, the second target port includes a port 0.

In a possible design, a quantity of ports in each row of the x ports is greater than or equal to a quantity of ports in each row of the m ports, and a quantity of ports in each column of the x ports is greater than or equal to a quantity of ports in each column of the m ports.

In a possible design, Y pieces of second information are received from the terminal device, to determine Y pieces of third information, and the processing the third information based on a correspondence between m ports for a downlink reference signal and x ports in an output dimension of the second model, to determine first information includes: concatenating the Y pieces of third information based on the correspondence between the m ports and the x ports, to determine the first information.

In the foregoing design, at the transmit end, the m ports for the reference signal are divided into Y subpanels, and each subpanel may be referred to as a port set. Data corresponding to each port set is separately input into the first model. For the receive end, namely, the network device, information about determined Y port sets is concatenated together as the restored first information, to restore downlink channel information.

In a possible design, the method further includes: receiving identification information of port sets corresponding to the second information from the terminal device.

In a possible design, a quantity of ports in each row of the x ports is less than or equal to a quantity of ports in each row of the m ports, and a quantity of ports in each column of the x ports is less than or equal to a quantity of ports in each column of the m ports.

According to a third aspect, an apparatus is provided. The apparatus may be a terminal device, or a component configured in the terminal device. Alternatively, the apparatus is a network device, or a component configured in the network device.

For example, the apparatus includes units that are in one-to-one correspondence with the methods/operations/steps/actions described in the first aspect. The units may be implemented by using a hardware circuit, software, or a combination of a hardware circuit and software.

For example, the apparatus includes a processing unit and a communication unit, and the processing unit and the communication unit may perform corresponding functions in any design of the first aspect. Specifically,

the communication unit is configured to receive a reference signal; and the processing unit is configured to: determine first information based on the received reference signal, where the first information includes data of m ports for the reference signal; and map the data of the m ports to an input of a first model based on a correspondence between the m ports and n ports in an input dimension of the first model, to obtain an output of the first model, where both m and n are integers greater than or equal to 1, and m and n are not equal.

For specific execution processes of the processing unit and the communication unit, refer to the first aspect. Details are not described herein again.

Alternatively, the apparatus includes a processor, configured to implement the method described in the first aspect. The apparatus may further include a memory, configured to store instructions and/or data. The processor is coupled to the memory, and the processor executes the program instructions stored in the memory, to implement the method in the first aspect. The apparatus may further include a communication interface, and the communication interface is used by the apparatus to communicate with another device. The communication interface may be a transceiver, a circuit, a bus, a module, a pin, or a communication interface of another type. In a possible design, the apparatus includes:

the memory, configured to store program instructions;
the communication interface, configured to receive a reference signal; and
the processor, configured to: determine first information based on the received reference signal, where the first information includes data of m ports for the reference signal; and map the data of the m ports to an input of a first model based on a correspondence between the m ports and n ports in an input dimension of the first model, to obtain an output of the first model, where both m and n are integers greater than or equal to 1, and m and n are not equal.

For specific execution processes of the communication interface and the processor, refer to the first aspect. Details are not described herein again.

According to a fourth aspect, an apparatus is provided. The apparatus may be a network device, or a component configured in the network device.

For example, the apparatus includes units that are in one-to-one correspondence with the methods/operations/steps/actions described in the second aspect. The units may be implemented by using a hardware circuit, software, or a combination of a hardware circuit and software.

For example, the apparatus includes a processing unit and a communication unit, and the processing unit and the communication unit may perform corresponding functions in any design of the second aspect. Specifically,

the communication unit is configured to receive second information from a terminal device; and the processing unit is configured to: determine third information based on a second model and the second information; and process the third information based on a correspondence between m ports for a downlink reference signal and x ports in an output dimension of the second model, to determine first information, where the first information includes data of the m ports, both m and x are integers greater than or equal to 1, and m and x are not equal.

For specific execution processes of the processing unit and the communication unit, refer to the second aspect. Details are not described herein again.

Alternatively, the apparatus includes a processor, configured to implement the method described in the second aspect. The apparatus may further include a memory, configured to store instructions and/or data. The processor is coupled to the memory, and the processor executes the program instructions stored in the memory, to implement the method in the second aspect. The apparatus may further include a communication interface, and the communication interface is used by the apparatus to communicate with another device. The communication interface may be a transceiver, a circuit, a bus, a module, a pin, or a communication interface of another type, and the another device may be a terminal device or the like. In a possible design, the apparatus includes:

the memory, configured to store program instructions;
the communication interface, configured to receive second information from the terminal device; and
the processor, configured to: determine third information based on a second model and the second information; and process the third information based on a correspondence between m ports for a downlink reference signal and x ports in an output dimension of the second model, to determine first information, where the first information includes data of the m ports, both m and x are integers greater than or equal to 1, and m and x are not equal.

For specific execution processes of the communication interface and the processor, refer to the second aspect. Details are not described herein again.

According to a fifth aspect, a computer-readable storage medium is provided, and includes instructions. When the instructions are run on a computer, the computer is enabled to perform the method in either the first aspect or the second aspect.

According to a sixth aspect, a chip system is provided. The chip system includes a processor, and may further include a memory, configured to implement the method in either the first aspect or the second aspect. The chip system may include a chip, or may include a chip and another discrete device.

According to a seventh aspect, a computer program product is provided, and includes instructions. When the instructions are run on a computer, the computer is enabled to perform the method in either the first aspect or the second aspect.

According to an eighth aspect, this application further provides a system. The system includes the apparatus in the third aspect and the apparatus in the fourth aspect.

BRIEF DESCRIPTION OF DRAWINGS

FIG. 1 is a diagram of a communication system according to this disclosure;

FIG. 2 and FIG. 3 are diagrams of communication architectures according to this disclosure;

FIG. 4 is a diagram of an architecture of an AI model according to this disclosure;

FIG. 5 and FIG. 6 are diagrams of neurons according to this disclosure;

FIG. 7 and FIG. 18 are schematic flowcharts according to this disclosure;

FIG. 8 is a diagram of a (8, 2, 2) port according to this disclosure;

FIG. 9 is a diagram of a (2, 2, 2) port according to this disclosure;

FIG. 10 is a diagram of matching between a (2, 2, 2) port and a (8, 2, 2) port according to this disclosure;

FIG. 11 is a diagram of a (4, 2, 2) port according to this disclosure;

FIG. 12 is a diagram of matching between a (4, 2, 2) port and a (8, 2, 2) port according to this disclosure;

FIG. 13 and FIG. 14 are respectively diagrams of matching between 8 ports and 32 ports and matching between 16 ports and 32 ports according to this disclosure;

FIG. 15 and FIG. 16 are respectively diagrams of obtaining subpanels through division in a row first and obtaining subpanels through division in a column first according to this disclosure;

FIG. 17 is a diagram of matching between 64 ports and 32 ports and restoring channel information according to this disclosure;

FIG. 19 is a diagram of a CSI feedback and restoring channel information according to this disclosure; and FIG. 20 and FIG. 21 are diagrams of apparatuses according to this disclosure.

DESCRIPTION OF EMBODIMENTS

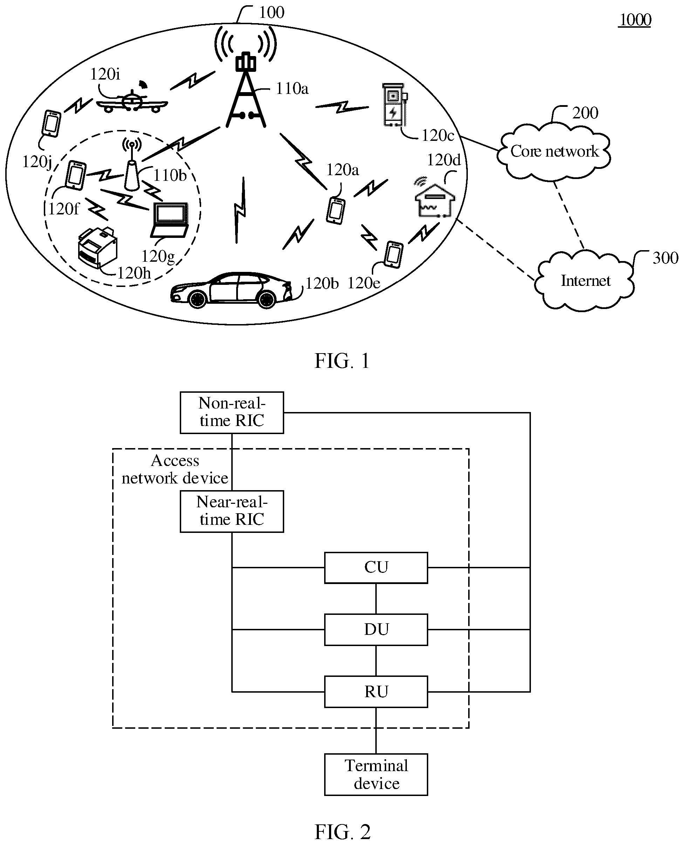

FIG. 1 is a diagram of an architecture of a communication system 1000 to which this disclosure is applicable. As shown in FIG. 1, the communication system includes a radio access network 100 and a core network 200. Optionally, the communication system 1000 may further include an internet 300. The radio access network 100 may include at least one access network device (for example, 110a and 110b in FIG. 1), and may further include at least one terminal device (for example, 120a to 120j in FIG. 1). The terminal device is connected to the access network device in a wireless manner, and the access network device is connected to the core network in a wireless or wired manner. A core network device and the access network device may be different physical devices that are independent of each other, or functions of a core network device and logical functions of the access network device may be integrated into a same physical device, or a part of functions of a core network device and a part of functions of the access network device may be integrated into one physical device. Terminal devices may be connected to each other in a wired or wireless manner, and access network devices may be connected to each other in a wired or wireless manner. FIG. 1 is merely a diagram. The communication system may further include another network device, for example, may further include a wireless relay device and a wireless backhaul device, which are not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next-generation base station in a 6th generation (6th generation, 6G) mobile communication system, a base station in a future mobile communication system, an access node in a wireless fidelity (wireless fidelity, Wi-Fi) system, or the like. Alternatively, the access network device may be a module or unit that implements a part of functions of a base station, for example, may be a central unit (central unit, CU), a distributed unit (distributed unit, DU), a central unit-control plane (CU control plane, CU-CP) module, or a central unit-user plane (CU user plane, CU-UP) module. The access network device may be a macro base station (for example, 110a in FIG. 1), or may be a micro base station or an indoor base station (for example, 110b in FIG. 1), or may be a relay node, a donor node, or the like. A specific technology and a specific device form that are used by the access network device are not limited in this disclosure.

In this disclosure, an apparatus configured to implement the functions of the access network device may be an access network device, or may be an apparatus, for example, a chip system, a hardware circuit, a software module, or a combination of a hardware circuit and a software module, that can support the access network device in implementing the functions. The apparatus may be installed in the access network device or may collaborate with the access network device for use. In this disclosure, the chip system may include a chip, or may include a chip and another discrete device. For ease of descriptions, the following describes the technical solutions provided in this disclosure by using an example in which the apparatus configured to implement the functions of the access network device is an access network device and the access network device is a base station.

(1) Protocol layer structure

Communication between an access network device and a terminal device complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal device may further include an artificial intelligence (artificial intelligence, AI) layer for transmitting data related to an AI function.

(2) Central unit (central unit, CU) and distributed unit (distributed unit, DU)

An access device may include the CU and the DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F 1-U. A specific name of each interface is not limited in this disclosure. The CU and the DU may be defined based on protocol layers of a wireless network. For example, functions of a PDCP layer and a protocol layer above the PDCP layer are set on the CU, and functions of protocol layers (for example, an RLC layer and a MAC layer) below the PDCP layer are set on the DU. For another example, functions of a protocol layer above a PDCP layer are set on the CU, and functions of the PDCP layer and protocol layers below the PDCP layer are set on the DU. This is not limited.

The division into the processing functions of the CU and the DU based on protocol layers is merely an example, and may alternatively be divided in another manner. For example, the CU or the DU may be divided to have functions having more protocol layers. For another example, the CU or the DU may be further divided to have some processing functions having protocol layers. In a design, some functions of the RLC layer and functions of a protocol layer above the RLC layer are set on the CU, and remaining functions of the RLC layer and functions of a protocol layer below the RLC layer are set on the DU. In another design, division of functions of the CU or the DU may alternatively be performed based on service types or other system requirements. For example, division may be performed based on latencies. Functions whose processing time needs to satisfy a latency requirement are set on the DU, and functions whose processing time does not need to satisfy the latency requirement are set on the CU. In another design, the CU may alternatively have one or more functions of the core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be distinguished at a physical layer (physical layer, PHY). For example, the DU may implement higher-layer functions of the PHY layer, and the RU may implement lower-layer functions of the PHY layer. When sending is performed, functions of the PHY layer may include at least one of the following: cyclic redundancy check (cyclic redundancy check, CRC) code adding, channel coding, rate matching, scrambling, modulation, layer mapping, precoding, resource mapping, physical antenna mapping, or radio frequency sending. When receiving is performed, functions of the PHY layer may include at least one of the following: CRC check, channel decoding, de-rate matching, descrambling, demodulation, layer de-mapping, channel detection, resource de-mapping, physical antenna de-mapping, or radio-frequency receiving. The higher-layer function of the PHY layer may include some functions of the PHY layer. For example, the functions are closer to the MAC layer. The lower-layer function of the PHY layer may include some other functions of the PHY layer. For example, the part of functions are closer to the radio frequency function. For example, the higher-layer function of the PHY layer may include CRC code adding, channel encoding, rate matching, scrambling, modulation, and layer mapping, and the lower-layer function of the PHY layer may include precoding, resource mapping, physical antenna mapping, and radio frequency sending functions. Alternatively, the higher-layer function of the PHY layer may include CRC code addition, channel encoding, rate matching, scrambling, modulation, layer mapping, and precoding. The lower-layer function of the PHY layer may include resource mapping, physical antenna mapping, and radio frequency sending functions. For example, the higher-layer function of the PHY layer may include CRC check, channel decoding, de-rate matching, decoding, demodulation, and layer de-mapping, and the lower-layer function of the PHY layer may include channel detection, resource de-mapping, physical antenna de-mapping, and radio-frequency receiving. Alternatively, the higher-layer function of the PHY layer may include CRC check, channel decoding, de-rate matching, decoding, demodulation, layer de-mapping, and channel detection, and the lower-layer function of the PHY layer may include resource de-mapping, physical antenna de-mapping, and radio-frequency receiving.

For example, the functions of the CU may be implemented by one entity, or may be implemented by different entities. For example, the functions of the CU may be further divided. To be specific, a control plane and a user plane that are of the CU are separated and implemented by different entities, which are a control plane CU entity (that is, a CU-CP entity) and a user plane CU entity (that is, a CU-UP entity). The CU-CP entity and the CU-UP entity may be coupled to the DU, to jointly complete functions of an access network device.

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. The modules and methods performed by the modules also fall within the protection scope of this disclosure.

In a possible implementation, the access network device includes the CU-CP, the CU-UP, the DU, and the RU. For example, this disclosure is executed by the DU, or the DU and the RU, or the CU-CP, the DU, and the RU, or the CU-UP, the DU, and the RU. This is not limited. The methods performed by the modules also fall within the protection scope of this disclosure.

The terminal device may also be referred to as a terminal, a user equipment (user equipment, UE), a mobile station, a mobile terminal device, or the like. The terminal device may be widely used in communication in various scenarios, for example, including but not limited to at least one of the following scenarios: device-to-device (device-to-device, D2D), vehicle-to-everything (vehicle-to-everything, V2X), machine-type communication (machine-type communication, MTC), internet of things (internet of things, IoT), virtual reality, augmented reality, industrial control, self-driving, telemedicine, a smart grid, smart furniture, smart office, a smart wearable, smart transportation, a smart city, or the like. The terminal device may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal device are not limited in this disclosure.

In this disclosure, an apparatus configured to implement functions of the terminal device may be a terminal device, or may be an apparatus, for example, a chip system, a hardware circuit, a software module, or a combination of a hardware circuit and a software module, that can support the terminal device in implementing the functions. The apparatus may be installed in the terminal device or may collaborate with the terminal device for use. For ease of descriptions, the following describes the technical solutions provided in this disclosure by using an example in which the apparatus configured to implement the functions of the terminal device is a terminal device and the terminal device is a UE.

The base station and the UE may be fixed or movable. The base station and/or the UE may be deployed on the land, including an indoor or outdoor scenario, and a handheld or vehicle-mounted scenario; or may be deployed on the water; or may be deployed on an airplane, a balloon, and an artificial satellite in the air. Application scenarios of the base station and the UE are not limited in this disclosure. The base station and the UE may be deployed in a same scenario or different scenarios. For example, the base station and the UE are both deployed on the land. Alternatively, the base station is deployed on the land, and the UE is deployed on the water. Examples are not described one by one.

Roles of the base station and the UE may be relative. For example, a helicopter or an uncrewed aerial vehicle 120i in FIG. 1 may be configured as a mobile base station, and for a UE 120j accessing the radio access network 100 through 120i, the UE 120i is a base station. However, for the base station 110a, 120i is a UE. In other words, communication between 110a and 120i is performed based on a radio air interface protocol. 110a and 120i may alternatively communicate with each other based on an interface protocol between base stations. In this case, relative to 110a, 120i is also a base station. Therefore, the base station and the UE may be collectively referred to as communication apparatuses, 110a and 110b in FIG. 1 each may be referred to as a communication apparatus having a base station function, and 120a to 120j in FIG. 1 each may be referred to as a communication apparatus having a UE function.

In this disclosure, an independent network element (for example, referred to as an AI network element or an AI node) may be introduced into the communication system shown in FIG. 1 to implement an AI-related operation. The AI network element may be directly connected to the access network device in the communication system, or may be indirectly connected to the access network device via a third-party network element. The third-party network element may be a core network element such as an authentication management function (authentication management function, AMF) or a user plane function (user plane function, UPF). Alternatively, an AI function, an AI module, or an AI entity may be configured in another network element in the communication system to implement the AI-related operation. For example, the another network element may be an access network device (such as a gNB), a core network device, or a network management system (operation, administration and maintenance, OAM). In this case, a network element that performs the AI-related operation is a network element in which an AI function is configured. The OAM is configured to perform operation, administration, maintenance, and the like on an access network device and/or a core network device.

Optionally, FIG. 2 shows an architecture of a communication system according to this disclosure. As shown in FIG. 2, in a first design, an access network device includes a near-real-time access network intelligent controller (RAN intelligent controller, RIC) module, configured to perform model training and inference. For example, the near-real-time RIC may be configured to train an AI model, and use the AI model for inference. For example, the near-real-time RIC may obtain information on a network side and/or a terminal side from at least one of a CU, a DU, or an RU, and the information may be used as training data or inference data. Optionally, the near-real-time RIC may deliver an inference result to at least one of the CU, the DU, the RU, or a terminal device. Optionally, the CU and the DU may exchange the inference result. Optionally, the DU and the RU may exchange the inference result. For example, the near-real-time RIC delivers the inference result to the DU, and the DU forwards the inference result to the RU.

Alternatively, in a second design, as shown in FIG. 2, a non-real-time RIC (where optionally, the non-real-time RIC may be located in an OAM or a core network device) is included outside an access network device, and is configured to perform model training and inference. For example, the non-real-time RIC is configured to train an AI model and use the model for inference. For example, the non-real-time RIC may obtain information on a network side and/or a terminal side from at least one of a CU, a DU, or an RU, and the information may be used as training data or inference data. An inference result may be delivered to at least one of the CU, the DU, the RU, or a terminal device. Optionally, the CU and the DU may exchange the inference result. Optionally, the DU and the RU may exchange the inference result. For example, the non-real-time RIC delivers the inference result to the DU, and the DU forwards the inference result to the RU.

Alternatively, in a third design, as shown in FIG. 2, an access network device includes a near-real-time RIC, and a non-real-time RIC is included outside the access network device (optionally, the non-real-time RIC may be located in an OAM or a core network device). Same as that in the foregoing second design, the non-real-time RIC may be configured to perform model training and inference. In addition/Alternatively, same as that in the foregoing first design, the near-real-time RIC may be configured to perform model training and inference. In addition/Alternatively, the non-real-time RIC performs model training, and the near-real-time RIC may obtain AI model information from the non-real-time RIC, obtain information on a network side and/or a terminal side from at least one of a CU, a DU, or an RU, and obtain an inference result by using the information and the AI model information. Optionally, the near-real-time RIC may deliver the inference result to at least one of the CU, the DU, the RU, or a terminal device. Optionally, the CU and the DU may exchange the inference result. Optionally, the DU and the RU may exchange the inference result. For example, the near-real-time RIC delivers the inference result to the DU, and the DU forwards the inference result to the RU. For example, the near-real-time RIC is configured to train a model A, and use the model A for inference. For example, the non-real-time RIC is configured to train a model B, and use the model B for inference. For example, the non-real-time RIC is configured to train a model C and send information about the model C to the near-real-time RIC, and the near-real-time RIC uses the model C for inference.

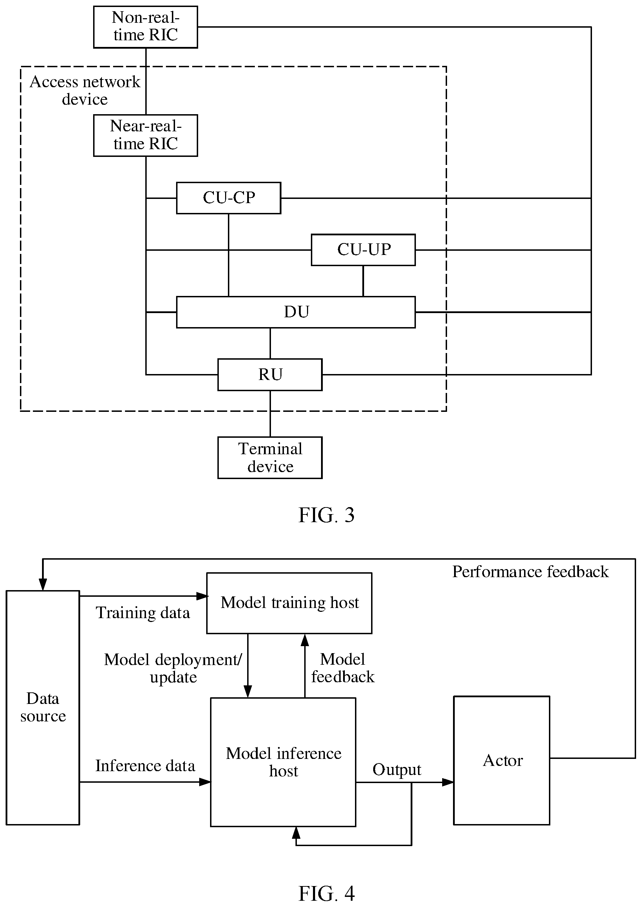

FIG. 3 shows an architecture of another communication system according to this disclosure. In comparison with FIG. 2, in FIG. 3, a CU is separated into a CU-CP and a CU-UP.

An AI model is a specific implementation of an AI function, and the AI model represents a mapping relationship between an input and an output of a model. The AI model may be a neural network, a linear regression model, a decision tree model, a support vector machine (support vector machine, SVM), a Bayesian network, a Q learning model, another machine learning model, or the like. In this disclosure, the AI function may include at least one of the following: data collection (collection of training data and/or inference data), data preprocessing, model training (or referred to as model learning), model information release (configuration of model information), model verification, model inference, or inference result release. Inference may also be referred to as prediction. In this disclosure, the AI model may be referred to as a model for short.

FIG. 4 is a diagram of an application architecture of an AI model. A data source (data source) is for storing training data and inference data. A model training host (model training host) analyzes or trains training data (training data) provided by the data source, to obtain an AI model, and deploys the AI model in a model inference host (model inference host). Optionally, the model training host may further update the AI model that has been deployed in the model inference host. The model inference host may further feed back related information of the deployed model to the model training host, so that the model training host optimizes, updates, or performs other processing on the deployed AI model.

Obtaining the AI model through learning by the model training host is equivalent to obtaining a mapping relationship between an input and an output of the model through learning by the model training host by using the training data. The model inference host uses the AI model to perform inference based on the inference data provided by the data source and obtain an inference result. The method may alternatively be described as follows: The model inference host inputs inference data to the AI model, and obtains an output from the AI model, where the output is an inference result. The inference result may indicate a configuration parameter used (acted) by an action object, and/or an operation performed by the action object. The inference result may be centrally planned by an actor (actor) entity, and sent to one or more action objects (for example, network entities) for action. Optionally, the action entity or the action object may feed back, to the data source, a parameter or a measurement quantity collected by the action entity or the action subject. This process may be referred to as performance feedback, and the parameter that is fed back may be used as the training data or the inference data. Optionally, feedback information related to model performance may be further determined based on the inference result output by the model inference host, and the feedback information is fed back to the model inference host. The model inference host may feed back performance information and the like of the model to the model training host based on the feedback information, so that the model training host optimizes, updates, or performs other processing on the deployed AI model. This process may be referred to as model feedback.

The AI model may be a neural network or another machine learning model. The neural network is used as an example. The neural network is a specific implementation form of a machine learning technology. According to a universal approximation theorem, the neural network can theoretically approximate any continuous function, so that the neural network has a capability of learning any mapping. Therefore, the neural network can accurately perform abstract modeling for a complex high-dimension problem.

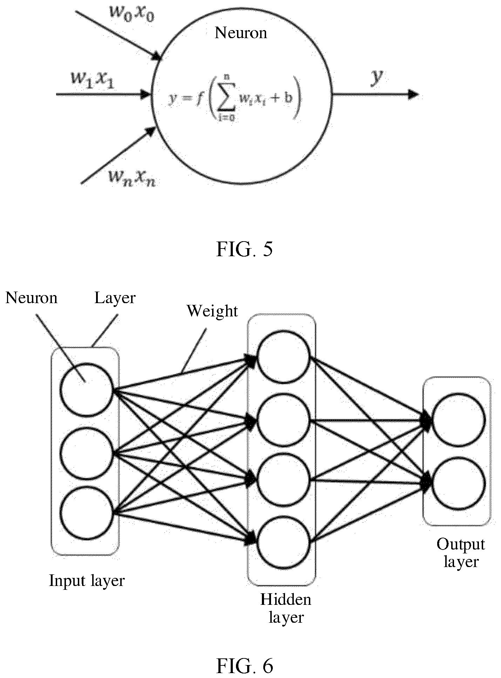

An idea of the neural network comes from a neuron structure of brain tissue. Each neuron performs a weighted summation operation on input values of the neuron, and generates an output of the weighted summation through an activation function. FIG. 5 is a diagram of a structure of a neuron. It is assumed that inputs of the neuron are $x = [x_0, x_1, \ldots, x_n]$, weights corresponding to the inputs are $w = [w, w_1, \ldots, w_n]$, and an offset of weighted summation is b. Forms of an activation function may be diversified. It is assumed that an activation function of a neuron is $y = f(z) = \max(0, z)$. In this case, an output of the neuron is

$$y = f\left(\sum_{i=0}^{i=n} w_i * x_i + b\right) =$$

$$\max\left(0, \sum_{i=0}^{i=n} w_i * x_i + b\right)$$

. For another example, if an activation function of a neuron is $y = f(z) = z$, an output of the neuron is

$$y = f\left(\sum_{i=0}^{i=n} w_i * x_i + b\right) = \sum_{i=0}^{i=n} w_i * x_i + b$$

. $x_i$, $w_i$, and b may be various possible values such as a decimal, an integer (including 0, a positive integer, a negative integer, or the like), or a complex number. Activation functions of different neurons in a neural network may be the same or different.

The neural network generally includes a multilayer structure, and each layer may include one or more neurons. A depth and/or a width of the neural network are/is increased, so that an expression capability of the neural network can be improved, and more powerful information extraction and abstract modeling capabilities can be provided for a complex system. The depth of the neural network may refer to a quantity of layers included in the neural network, and a quantity of neurons included in each layer may be referred to as a width of the layer. FIG. 6 is a diagram of a layer relationship of a neural network. In an implementation, the neural network includes an input layer and an output layer. After performing neuron processing on a received input, the input layer of the neural network transfers a result to the output layer, and the output layer obtains an output result of the neural network. In another implementation, the neural network includes an input layer, a hidden layer, and an output layer. After performing neuron processing on a received input, the input layer of the neural network transfers a result to the intermediate hidden layer, then the hidden layer transfers a calculation result to the output layer or an adjacent hidden layer, and finally, the output layer obtains an output result of the neural network. One neural network may include one hidden layer or a plurality of hidden layers that are sequentially connected. This is not limited. In a training process of the neural network, a loss function may be defined. The loss function describes a difference or a difference value between an output value of the neural network and an ideal target value, and this disclosure does not limit a specific form of the loss function. A training process of the neural network is a process of adjusting a neural network parameter, such as a quantity of layers and a width of the neural network, a weight of a neuron, a parameter in an activation function of the neuron, and/or the like, so that a value of the loss function is less than a threshold or meets a target requirement.

An AI technology is a technology that performs complex calculation by simulating a human brain. With improvement of data storage and capabilities, AI is applied more widely in many fields, and is paid more attention in communication systems. In a wireless network, when an AI model is used, a problem that needs to be resolved is a conflict between a flexible and variable signal format in the wireless network and a fixed input format and/or output format of the AI model. For example, in a multi-antenna (for example, a higher-order multiple-input multiple-output (multiple-input multiple-output, MIMO)) system, supported antenna ports mainly include 4 ports, 8 ports, 16 ports, 24 ports, 32 ports, and the like. With development of technologies, the supported antenna ports may be further extended to 64 ports, 128 ports, or more ports subsequently. Different ports may have different requirements on an input dimension of the AI model. For example, a transmit end sends a reference signal by using 32 ports, and the reference signal may be referred to as a reference signal of the 32 ports. A receive end processes the reference signal of the 32 ports, and may obtain data of the 32 ports for the reference signal. If compression and other processing are performed on the data of the 32 ports in an AI manner, an input dimension of an AI model deployed in the receive end needs to meet a requirement of the 32 ports. In an AI-based system, how to reduce storage overheads of a device is a technical problem worth studying. To reduce the storage overheads of the device, so as to reduce device costs, a limited quantity of AI models may be used to support reference signals of a plurality of types of ports. How to support processing of the reference signal of the plurality of ports by using the limited quantity of AI models, to implement self-adaptation to the port for the reference signal is a technical problem to be resolved in this disclosure.

This disclosure provides a model application method. The method is applicable to both processing of an uplink reference signal and processing of a downlink reference signal. In the method, a receive end that receives a reference signal maps data of m ports for the reference signal to a first model based on a correspondence between the m ports for the reference signal and n ports in an input dimension of the first model of the receive end. For example, when the m ports for the reference signal are less than the n ports in the input dimension of the first model, that is, m is less than n, a first target port may be selected from the n ports, and a quantity of first target ports is equal to m. The data corresponding to the m ports for the reference signal is mapped to the first target port in the input dimension of the first model. Alternatively, when m is greater than n, in a design, m is an integer multiple of n, the m ports may be divided into Y port sets, and each port set includes n ports. For each port set, data of the n ports is mapped to the n ports in the input dimension of the first model. Alternatively, in another design, m is a non-integer multiple of n. In this design, the m ports may also be divided into Y port sets, where Y is equal to $\left\lceil \frac{m}{n} \right\rceil$ . In a first part of (for example, Y-1 or mod(m, n)) port sets, each port set includes n ports, and each port set in a remaining second part of (for example, one or Y- mod(m, n)) port sets includes s ports, where s is a positive integer less than n and greater than 0. mod is a modulo operation. For the first part of port sets, data corresponding to the n ports included in each port set is mapped to the n ports in the input dimension of the first model. For the second part of port sets, data corresponding to the s ports included in each port set is mapped to an input of the first model based on the foregoing method in a case in which m is less than n.

The method in this disclosure is applicable to both processing of the uplink reference signal and processing of the downlink reference signal. The method in this disclosure is applicable provided that processed data is related to a port. By using the method in this disclosure, a receive end of a reference signal may process reference signals of a plurality of port types by using one AI model. In comparison with a case in which one AI model needs to be trained and stored for a reference signal of each port type, training and storage overheads are reduced.

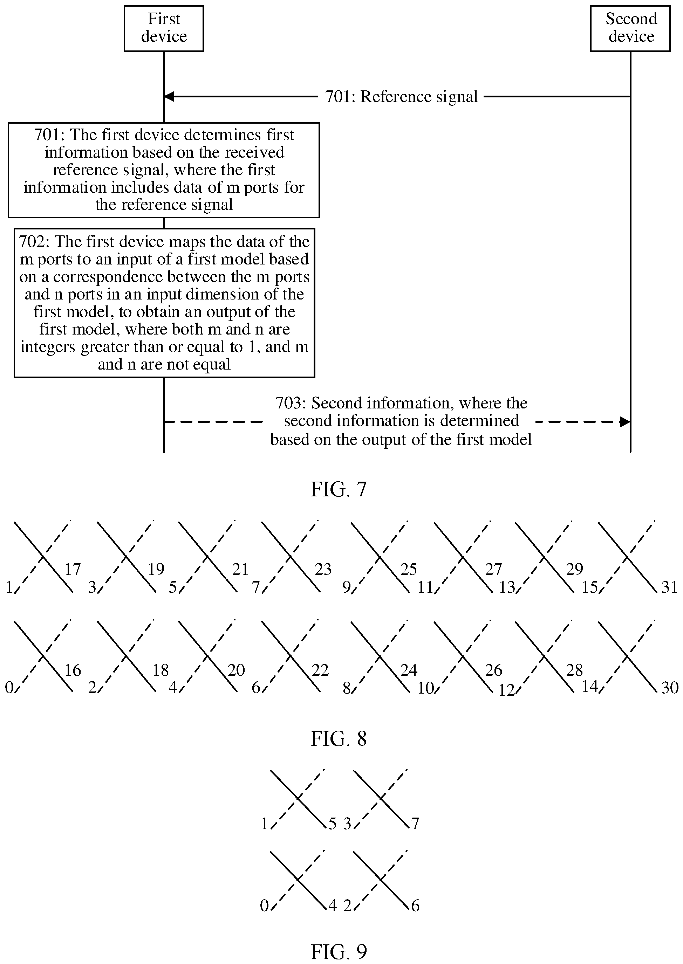

As shown in FIG. 7, processing of a downlink reference signal is used as an example, to provide a procedure of a model application method, which includes at least the following steps.

Step 701: A first device determines first information based on a received reference signal, where the first information includes data of m ports for the reference signal.

Optionally, the first device receives the reference signal from a second device. In uplink transmission, the first device is a base station, the second device is a UE, and the reference signal may be referred to as an uplink reference signal. In downlink transmission, the first device is a UE, the second device is a base station, and the reference signal may be referred to as a downlink reference signal. The m ports for the reference signal refer to m ports used by the second device to send the reference signal. In the downlink transmission, the m ports for the reference signal refer to m ports used by the base station to send the downlink reference signal. In the uplink transmission, the m ports for the reference signal refer to m ports used by the UE to send the uplink reference signal. Optionally, the port may also be referred to as an antenna port. In descriptions of this disclosure, the port is not distinguished from the antenna port.

The downlink reference signal is used as an example. The UE may perform channel estimation based on the received downlink reference signal, to obtain downlink channel information H. The channel information H obtained through estimation may also be referred to as a channel estimation matrix H. A dimension of the channel information H obtained through estimation is (nTx, nRx, nsubband). Optionally, the channel information H may be preprocessed, and a dimension of preprocessed channel information is (nTx, nsubband). nTx represents a quantity of ports used by a transmit end to send a reference signal, namely, a port of the base station, and nTx is a positive integer. Because the base station sends the reference signal by using a port, nTx may also be referred to as a quantity of ports for the reference signal. nRx represents a quantity of ports of a receive end, namely, a port of the UE, and nRx is a positive integer. nsubband represents a quantity of frequency domain units in frequency domain, and nsubband is a positive integer. In this disclosure, how to match the port quantity nTx for the reference signal with a quantity of ports in an input dimension of a first model is mainly considered. Optionally, the first information in step 701 may refer to the downlink channel information H or the preprocessed channel information, in other words, a dimension of the first information may be (nTx, nRx, nsubband) or (nTx, nsubband), or a dimension of the first information in step 701 includes only nTx. This is not limited. For example, it is set that the second device sends the downlink reference signal to the first device by using the m ports, and the first device processes the downlink reference signal, so that the obtained first information in an nTx dimension includes data corresponding to each of the m ports. The input dimension of the first model for processing the first information includes n ports. When a quantity of the m ports is different from that of the n ports, how to implement self-adaptation of the data of the m ports is a problem mainly concerned.

Step 702: The first device maps the data of the m ports to an input of the first model based on a correspondence between the m ports and the n ports in the input dimension of the first model, to obtain an output of the first model, where both m and n are integers greater than or equal to 1, and m and n are not equal.

As described above, the first information includes the data corresponding to each of the m ports for the reference signal. It is assumed that the input dimension of the first model includes the n ports, and m and n are not equal. How to map the data of the m ports to the n ports in the input dimension of the first model is mainly discussed. Optionally, in addition to the n ports, the input dimension of the first model may further include another dimension. This is not limited. The first model is for processing the first information. The processing includes but is not limited to compression, quantization, modulation, encoding, or the like. The first model may also be referred to as an AI model, an encoding model, or the like.

In a design, a case in which the quantity of the n ports in the input dimension of the first model is greater than that of the m ports for the reference signal, namely, a case in which a value of n is greater than that of m, is mainly considered. For example, a maximum quantity, of ports for a reference signal, supported in a protocol is 32. Optionally, both the m ports and the n ports are indexed in a matrix manner, a quantity of ports in each row of the n ports is greater than or equal to a quantity of ports in each row of the m ports, and a quantity of ports in each column of the n ports is greater than or equal to a quantity of ports in each column of the m ports. For example, in a system, for example, in a communication system based on the 3rd generation partnership project (3rd generation partnership project, 3GPP) protocol, supported port indexing of the base station may be represented as (N1, N2), where N1 represents a quantity of columns of the port indexing, that is, each column has N1 ports; and N2 represents a quantity of rows of the port indexing, that is, each row has N2 ports. A value of (N1, N2) may be (2, 1), (2, 2), (4, 1), (3, 2), (6, 1), (4, 2), (8, 1), (4, 3), (6, 2), (12, 1), (8, 2), (16, 1), (4, 4), or the like. When an antenna element is dual-polarized, a quantity of ports is 2N1*N2. It may be specified that the ports are indexed as follows: Indexing is preferentially performed in one polarization direction, and then indexing is performed in the other polarization direction, where in one polarization direction, indexing is first performed in a column. As shown in FIG. 8, 32 ports of (8, 2, 2) are used as an example. (8, 2, 2) represents there are two polarization directions, each polarization direction has eight columns, and each column has two rows. In FIG. 8, a dashed line represents one polarization direction, and a solid line represents the other polarization direction. Indexing is preferentially performed in the polarization direction corresponding to the dashed line. According to a column first principle, numbering is performed sequentially in each column from bottom to top. For example, in a first polarization direction corresponding to the dashed line, sequence numbers of two ports in the 1st column are sequentially 0 and 1, sequence numbers of two ports in the 2nd column are sequentially 2 and 3, and so on. In the 8th column, sequence numbers of two ports are sequentially 14 and 15. Then, in a second polarization direction corresponding to the solid line, ports are numbered according to the column first principle. For example, in the second polarization direction, sequence numbers of two ports in the 1st column are sequentially 16 and 17, sequence numbers of two ports in the 2nd column are sequentially 18 and 19, and so on. In the 8th column, sequence numbers of two ports are sequentially 30 and 31.

In this disclosure, when the quantity of the n ports in the input dimension of the first model is greater than the quantity of the m ports for the reference signal, the following solution is used: A part of the n ports is selected, and is referred to as a first target port. A quantity of first target ports is the same as the value of m. The data of the m ports included in the first information is input into an input corresponding to the first target port of the first model. This process may be described as: determining the first target port in the n ports based on the correspondence between the m ports and the n ports, where the quantity of first target ports is equal to m. Optionally, an indexing manner of m ports included in the first target port is the same as an indexing manner of the m ports for the reference signal. The data of the m ports is input into the input corresponding to the first target port of the first model. Optionally, the correspondence between the m ports and the n ports may be specified in a protocol, or notified by the base station to the UE in advance. This is not limited. In other words, in this disclosure, the UE may select the first target port from the m ports according to a rule. The rule may be the correspondence between the m ports and the n ports. The correspondence may represent a correspondence between a port i in the m ports for the reference signal and a port j in the n ports of the first model, where i is an integer greater than or equal to 1 and less than or equal to m, and j is an integer greater than or equal to 1 and less than or equal to n. In this disclosure, for example, i and j are counted from 1. Optionally, i and j may alternatively be counted from 0. For example, i is an integer greater than or equal to 0 and less than or equal to m-1, and j is an integer greater than or equal to 0 and less than or equal to n-1. A counting manner of another parameter is similar, and details are not described again.

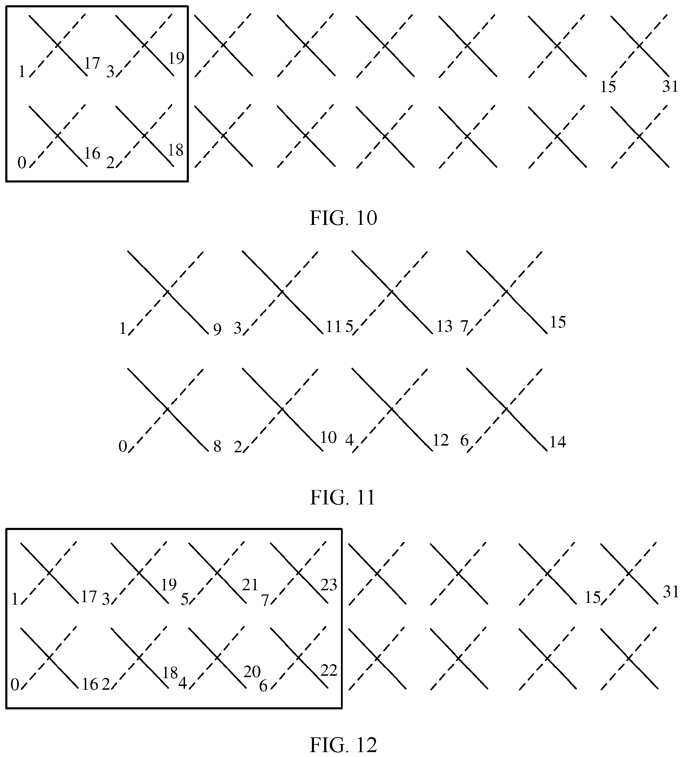

As shown in FIG. 9 and FIG. 10, for example, the value of m is 8, eight ports for the reference signal are represented as (2, 2, 2), a value of n is 32, and the n ports in the input dimension of the first model are represented as (8, 2, 2). For a correspondence between the eight ports and the 32 ports, refer to FIG. 10. In a first polarization direction corresponding to the dashed line, sequence numbers of four ports for the reference signal are respectively 0 to 3, and corresponding sequence numbers of ports in the first model are respectively 0 to 3. In a second polarization direction corresponding to the solid line, sequence numbers of the four ports for the reference signal are respectively 4 to 7, and corresponding sequence numbers of ports in the first model are respectively 16 to 19. Alternatively, as shown in FIG. 11, for example, the value of m is 16, and 16 ports for the reference signal may be represented as (4, 2, 2). For a correspondence between 32 antenna ports in the input dimension of the first model and the 16 ports for the reference signal, refer to FIG. 12. In FIG. 12, in a first polarization direction corresponding to the dashed line, sequence numbers of eight ports for the reference signal are respectively 0 to 7, and corresponding sequence numbers of ports in the first model are respectively 0 to 7. In a second polarization direction corresponding to the solid line, sequence numbers of the eight ports for the reference signal are respectively 8 to 15, and corresponding sequence numbers of ports in the first model are respectively 16 to 23.

In a design, the m ports are indexed in a matrix manner, include M1 columns and M2 rows, and use dual polarization directions, and the m ports are represented as $(M1, M2, 2)$; the n ports are indexed in a matrix manner, include N1 columns and N2 rows, and use dual polarization directions, and the n ports are represented as $(N1, N2, 2)$, where M1, M2, N1, and N2 are all integers greater than or equal to 1; and the correspondence between the m ports and the n ports satisfies the following:

in a polarization direction 1: ports $(i*M2$ to $(i+1)*M2-1)$ in the m ports correspond to ports $(i*N2$ to $i*N2+M2-1)$ in the n ports; and
in a polarization direction 2: ports $(i*M2+M1*M2$ to $(i+1)*M2-1+M1*M2)$ in the m ports correspond to ports $(i*N2+N1*N2$ to $i*N2+M2-1+N1*N2)$ in the n ports, where i is an integer greater than or equal to 0 and less than or equal to M1-1.

For example, when the value of m is 8, eight ports for the reference signal are represented as (2, 2, 2), the value of n is 32, and 32 ports of the first model are represented as (8, 2, 2). In the polarization direction 1, four ports (0 to 3) for the reference signal respectively correspond to ports (0 to 3) of the first model. In the polarization direction 2, four ports (4 to 7) for the reference signal respectively correspond to ports (16 to 19) of the first model. Refer to FIG. 9 and FIG. 10. Alternatively, when the value of m is 16, 16 ports for the reference signal are represented as (4, 2, 2), the value of n is 32, and 32 ports of the first model are represented as (8, 2, 2). In the polarization direction 1, eight ports (0 to 7) for the reference signal respectively correspond to ports (0 to 7) of the first model. In the polarization direction 2, eight ports (8 to 15) for the reference signal respectively correspond to ports (16 to 23) of the first model. Refer to FIG. 11 and FIG. 12.

Alternatively, a manner of selecting m ports from the n ports of the first model may be according to a rule other than the correspondence between the m ports and the n ports. For example, the rule may be as follows: The selected first target port at least includes a port, and the port may be a port 0, or the like. The rule is simple and easy to operate and implement. Optionally, the foregoing process of selecting the m ports from the n ports of the first model may be described as follows: A submodel is determined in the first model, where an input dimension of the submodel includes m ports, and an indexing manner of the m ports is the same as the indexing manner of the m ports for the reference signal.

Optionally, a port other than the first target port in the n ports of the first model may be filled with preset data, and the preset data may be 0 or another agreed value. Alternatively, the data of the m ports in the first information may be replicated, and replicated data is filled into another port of the first model, or the like. In other words, an input of the port other than the first target port in the first model is the preset data or the replicated data of the data of the m ports, or the like. For a manner of processing the data filled into the another port by the UE, a specific processing manner may be preset in a protocol, or a base station side notifies the UE of the processing manner by using signaling, or the UE reports the processing manner to the base station. This is not limited.

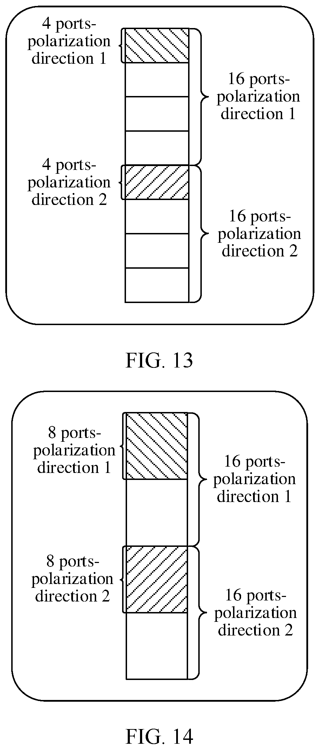

For example, as shown in FIG. 13, the value of m is 8, the value of n is 32, and each rectangle in FIG. 13 represents four ports. In the polarization direction 1, data of four ports (where sequence numbers of the four ports may be 0 to 3) for the reference signal is input into a corresponding input of four ports (where sequence numbers of the four ports may be 0 to 3) of the first model, and remaining 12 ports in the polarization direction 1 are filled with preset data or replicated data. In the polarization direction 2, data of four ports (where sequence numbers of the four ports may be 4 to 7) for the reference signal are input into a corresponding input of four ports (where sequence numbers of the four ports may be 16 to 19) of the first model, and remaining 12 ports in the polarization direction 2 are filled with preset data or replicated data. Alternatively, as shown in FIG. 14, the value of m is 16, the value of n is 32, and each rectangle in FIG. 14 represents eight ports. In the polarization direction 1 and the polarization direction 2, data of the eight ports for the reference signal is respectively filled into input corresponding to eight ports corresponding to the first model, and remaining eight ports of the first model are filled with preset data or replicated data. Details are not described again.

In the foregoing design, the method for filling the port other than the first target port in the first model with the preset data (for example, adding zeros) is very simple, easy to implement, and has low power consumption. Optionally, to improve performance of the first model, when the first model is trained and a loss function is designed, a scenario in which input data may be the preset data that is filled into may be considered. For a method for adding replicated data to the port other than the first target port in the first model, in a scenario in which the output of the first model is sent to the receive end, the method is equivalent to that same data is transmitted for a plurality of times, so that precision of data transmission is improved, while calculation complexity of the receive end is not changed, and effect of better performance can be achieved. Optionally, to improve performance of the first model, when the first model is trained and a loss function is designed, a scenario in which input data may be the replicated data may be considered.

In another design, a case in which the n ports in the input dimension of the first model are less than the m ports for the reference signal, namely, a case in which the value of n is less than that of m is mainly considered. Optionally, both the m ports and the n ports may be indexed in a matrix manner, a quantity of ports in each row of the n ports is less than or equal to a quantity of ports in each row of the m ports, and a quantity of ports in each column of the n ports is less than or equal to a quantity of ports in each column of the m ports. For example, the m ports for the reference signal are divided into Y port sets, a quantity of ports included in at least one port set is equal to n, and indexing and distribution of n ports included in the port set are the same as indexing and distribution of the n ports in the input dimension of the first model. Data of the n ports corresponding to the port set is respectively input into the input corresponding to the n ports of the first model. In one case, m can be divisible by n, the m ports may be divided into the Y port sets, each port set includes n ports, and data corresponding to the n ports included in each port set is respectively mapped to the input corresponding to the n ports of the first model. In another case, it is possible that m cannot be divisible by n. Similarly, the m ports are divided into the Y port sets. Y is equal to $\left\lceil \dfrac{m}{n} \right\rceil$, each port set in a first part of (for example, Y-1 or mod(m, n)) port sets includes n ports, and each port set in a remaining second part of (for example, one or Y-mod(m, n)) port sets includes s ports, where a value of s is a positive integer less than n and greater than 0. mod represents a modulo operation. For the first part of port sets, data corresponding to the n ports included in each port set is input into the input corresponding to the n ports of the first model. For the second part of port sets, data corresponding to the s ports included in each port set is mapped to the input of the first model based on the design in which m is less than n. For example, with development of technologies, a value of m ports for the reference signal may be 65, and a value of n ports in the input dimension of the first model is 32. In this case, in this disclosure, three port sets may be obtained through division, first two port sets each include 32 ports, and the $3^{rd}$ port set includes one port. Data corresponding to the first two port sets is respectively mapped to an input corresponding to 32 ports of the first model. Data corresponding to the port included in the $3^{rd}$ port set may be mapped to an input corresponding to one port of the first model, preset data, replicated data of data corresponding to another port, or the like is input into remaining 31 ports of the first model. This is not limited. The foregoing process may be described as: determining Y port sets based on the m ports and the n ports, where Y is an integer greater than 1, and at least one of the Y port sets includes n ports; and optionally, indexing and distribution of the n ports included in the port set are the same as indexing and distribution of the n ports in the input dimension of the first model. For the port set including the n ports, data corresponding to the n ports included in the port set is input into the input corresponding to the n ports of the first model. Alternatively, the foregoing process may be described as follows: The m ports for the reference signal are divided into Y subpanels, where a quantity of ports and indexing and distribution of the ports of at least one subpanel are the same as a quantity, and indexing and distribution of the n ports in the input dimension of the first model. Optionally, a panel is a physical concept, ports may be distributed in an antenna panel in a specific indexing manner, a subpanel may be considered as a logical concept, and one panel may be divided into at least one subpanel. A manner of dividing the m ports for the reference signal into the Y subpanels is not limited.

For example, the subpanel may be obtained through division in a row first manner, or it is described as that the port set is obtained through division in a row first manner. For example, the m ports are indexed in a matrix manner, include M1 columns and M2 rows, and use dual polarization directions, and the m ports are represented as (M1, M2, 2); the n ports are indexed in a matrix manner, include N1 columns and N2 rows, and use dual polarization directions, and the n ports are represented as (N1, N2, 2), where M1, M2, N1, and N2 are all integers greater than or equal to 1; and for a port set k in the Y port sets, where k is an integer greater than or equal to 0 and less than or equal to Y-1, the correspondence between the m ports and the n ports satisfies the following:

in a polarization direction 1: ports (i*M2+k*N2 to i*M2+k*N2+N2-1) in the m ports correspond to ports (i*N2 to i*N2+N2-1) in the n ports; and

in a polarization direction 2: ports $(i*M2+k*N2+M1*M2$ to $i*M2+k*N2+N2-1+M1*M2)$ in the m ports correspond to ports $(i*N2+N1*N2$ to $i*N2+N2-1+N1*N2)$ in the n ports, where i is an integer greater than or equal to 0 and less than or equal to M1-1.

For example, the value of m is 64, a quantity of ports for the reference signal is 64, and indexing and distribution of the ports for the reference signal are (8, 4, 2). The value of n is 32, a quantity of ports in the input dimension of the first model is 32, and the indexing and the distribution of the ports in the input dimension of the first model are (8, 2, 2). As shown in FIG. 15, 64 ports for the reference signal may be divided into two subpanels by row, and the two subpanels are a subpanel 1 and a subpanel 2. For sequence numbers of ports included in the subpanel 1 and the subpanel 2, refer to FIG. 15. Details are not described. The subpanel 1 or the subpanel 2 each includes 32 ports, and indexing and distribution of the included 32 ports are the same as the indexing and the distribution of 32 ports included in the input dimension of the first model. Having same indexing and distribution may be understood as having a same quantity of rows and a same quantity of columns. Data corresponding to the ports included in the subpanel 1 and the subpanel 2 is respectively mapped to the input of the first model. For a correspondence between the sequence numbers of ports included in the subpanel 1 or the subpanel 2 and sequence numbers of the 32 ports in the input dimension of the first model, refer to descriptions in the foregoing formulas. Details are not described again.

Alternatively, the subpanel may be obtained through division in a column first manner, or it is described as that the port set is obtained through division in a column first manner. For example, the m ports are indexed in a matrix manner, include M1 columns and M2 rows, and use dual polarization directions, and the m ports are represented as (M1, M2, 2); the n ports are indexed in a matrix manner, include N1 columns and N2 rows, and use dual polarization directions, and the n ports are represented as (N1, N2, 2); and for a port set k in the Y port sets, where k is an integer greater than or equal to 0 and less than or equal to Y-1, the correspondence between the m ports and the n ports satisfies the following:

in a polarization direction 1: ports $(i*M2+k*N1$ to $i*M2+k*N1+M2-1)$ in the m ports correspond to ports $(i*N2$ to $i*N2+M2-1)$ in the n ports; and
in a polarization direction 2: ports $(i*M2+k*N1+M1*M2$ to $i*M2+k*N1+M2-1+M1*M2)$ in the m ports correspond to ports $(i*N2+N1*N2$ to $i*N2+M2-1+N1*N2)$ in the n ports, where i is an integer greater than or equal to 0 and less than or equal to M1-1.

The foregoing example is still used. As shown in FIG. 16, 64 ports for the reference signal may be divided into two subpanels in a column first manner, and the two subpanels are referred to as a subpanel 1 and a subpanel 2. For sequence numbers of ports included in the subpanel 1 and the subpanel 2, refer to FIG. 16. Indexing and distribution of the 32 ports included in the subpanel 1 or the subpanel 2 are the same as the indexing and the distribution of 32 ports included in the first model. For a correspondence between the sequence numbers of ports that are for the reference signal and that are included in the subpanel 1 or the subpanel 2 and sequence numbers of the 32 ports in the input dimension of the first model, refer to descriptions in the foregoing formulas.

Optionally, step 703: The first device sends second information to the second device, where the second information is determined based on the output of the first model.

For example, the first device is a UE, the second device is a base station, and the reference signal is a channel state information-reference signal (channel state information-reference signal, CSI-RS). The second information may be channel state information (channel state information, CSI). For example, the output of the first model may be CSI. In this case, the UE feeds back the CSI to the base station. Alternatively, the output of the first model is downlink channel information H. The UE may determine CSI based on H, and feed back the CSI to the base station. In some scenarios, when receiving a downlink reference signal, the UE may not need to feed back corresponding channel information to the base station. Therefore, the foregoing step 703 is optional. For example, the downlink reference signal may be a demodulation reference signal (demodulation reference signal, DMRS). The UE may match a port of the DMRS with the input of the first model. The output of the first model may be estimated downlink channel information H. The UE decodes subsequent downlink data based on the estimated downlink channel information H, and does not need to feed back a situation of a downlink channel to the base station.

Optionally, when receiving the second information, the base station may restore the first information based on the second information. A manner in which the base station restores the first information is not limited to an AI manner. The AI manner is used as an example. The base station may determine third information based on a second model and the second information. Optionally, the second model is for processing the second information. The processing includes but is not limited to decompression, dequantization, demodulation, decoding, or the like. The second model may also be referred to as an AI model, a decoding model, or the like. The third information is processed based on a correspondence between the m ports for the downlink reference signal and x ports in an output dimension of the second model, to determine the first information, where the first information includes the data of the m ports, both m and x are integers greater than or equal to 1, and m and x are not equal. The first information is first information restored by the base station, and may be the same as or different from the first information sent by the UE. This is not limited. For example, an error may exist between the first information sent by the UE and the first information restored by the base station.

In a design, it is considered that the m ports for the reference signal are less than the x ports in the output dimension of the second model, that is, x is greater than m. Optionally, when ports are indexed in a matrix manner, a quantity of ports in each row of the x ports is greater than or equal to a quantity of ports in each row of the m ports, and a quantity of ports in each column of the x ports is greater than or equal to a quantity of ports in each column of the m ports.

In this design, the base station may determine a second target port in the x ports based on the correspondence between the m ports and the x ports, and determine the first information based on data that corresponds to the second target port and that is in the third information. Optionally, this design may correspond to a transmit side, namely, a UE side. When the n ports in the input dimension of the first model are greater than the m ports for the reference signal, the UE selects the first target port from the n ports, where the quantity of first target ports is equal to m. The data corresponding to the m ports for the reference signal is mapped to the input of the first model. An operation of filling another port of the first model with preset data or replicated data of the data corresponding to the m ports is performed. In this design, for the operation of filling another port with preset data, the base station may select the second target port from the x ports based on the correspondence between the m ports and the x ports. The second target port corresponds to a port corresponding to actually transmitted channel information. The first information is restored based on the data corresponding to the second target port. Optionally, a value of x may be the same as the value of n. For the correspondence between the m ports and the x ports, refer to the correspondence between the m ports and the n ports on the transmit side. Alternatively, for an operation of filling another port with replicated data of the data corresponding to the m ports, a same method as the foregoing may be performed. To be specific, the second target port may be selected from the x ports, and the first information is restored based on the data corresponding to the second target port. Alternatively, the first information may be restored based on data corresponding to the x ports of the second model. This is not limited. Optionally, the second target port may include a port 0.

In another design, a case in which the m ports for the reference signal are greater than the x ports in the output dimension of the second model, that is, x is less than m, is considered. Optionally, when ports are indexed in a matrix manner, a quantity of ports in each row of the x ports is less than or equal to a quantity of ports in each row of the m ports, and a quantity of ports in each column of the x ports is less than or equal to a quantity of ports in each column of the m ports.

In this design, the base station may receive Y pieces of second information from the UE, and determine Y pieces of third information based on the second model and the Y pieces of second information. The base station may concatenate the Y pieces of third information based on the correspondence between the m ports and the x ports, to determine the first information. This design corresponds to a case in which m is greater than x in the foregoing design on the UE side. The m ports are divided into the Y port sets, data corresponding to each port set is separately mapped to the first model, and the second information determined based on the output of the first model is sent to the base station. The Y port sets may correspond to the Y pieces of second information, and the UE sends the Y pieces of second information to the base station. When receiving the Y pieces of second information, the base station uses each piece of second information or data obtained by processing the second information as an input of the second model. An output of the second model is the third information or the third information is determined based on the output of the second model. The base station may obtain the Y pieces of third information. The Y pieces of third information are concatenated together based on the correspondence between the m ports and the x ports, to form the first information. Optionally, x may be equal to n. For the correspondence between the m ports and the x ports, refer to the correspondence between the m ports and the n ports on the transmit side. For example, the subpanel is obtained through division in a row first manner shown in FIG. 15. The base station may concatenate two pieces of third information in a row first manner, to obtain the first information. A port set corresponding to each piece of second information may be implicit, for example, indexed in a sequence of hybrid automatic repeat request (hybrid automatic repeat request, HARQ) process identifiers corresponding to the second information. Alternatively, a port set corresponding to each piece of second information may be indicated by using signaling. Optionally, in addition to sending the second information to the base station, the UE may further send, to the base station, identification information of the port sets corresponding to the second information. The base station may concatenate pieces of third information based on identifiers of port sets. The foregoing example is still used. When concatenating the two pieces of third information in the row first manner, the base station may further need to know an identifier of a port set corresponding to each piece of third information, where the identifier of the port set is an identifier of the subpanel in FIG. 15.

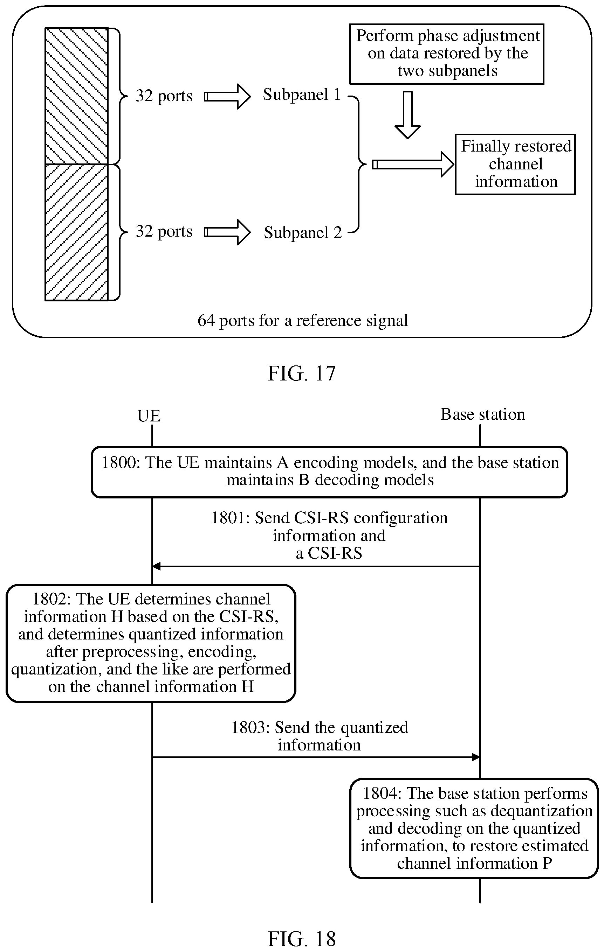

As shown in FIG. 17, it is set that an input dimension of an encoding model in the UE includes 32 ports, and the quantity of the ports for the reference signal are 64. The UE divides the 64 ports for the reference signal into two subpanels, maps data corresponding to the subpanels to the encoding model, and sends the data to the base station. The base station performs, based on ports, inverse transformation on the data corresponding to the two subpanels, to restore final channel information. Optionally, phase adjustment may be performed, based on a location relationship between ports, on the data corresponding to the two subpanels, to improve overall system performance. For example, the base station restores channel information X1 based on feedback information corresponding to a subpanel 1, and restores channel information X2 based on feedback information corresponding to a subpanel 2, where a phase difference between X1 and X2 is $\alpha$. For example, the phase difference $\alpha$ may be a phase obtained by dividing the $1^{st}$ element in X1 by a corresponding $1^{st}$ element in X2. The base station may calculate an expected relative phase angle $\varphi$ between X1 and X2 based on a wavelength, a relative distance between the subpanel 1 and the subpanel 2, and the like. X1 may remain unchanged, and X2 is corrected, where corrected $X2=X2*exp(\varphi-\alpha)$.

The solutions of this disclosure are described by using an example in which the first device is a UE, the second device is a base station, and the downlink reference signal is processed.

With development of wireless communication technologies, services supported in a communication system continuously increase, and higher requirements are imposed on the communication system in terms of indicators such as a system capacity and a communication latency. In a MIMO technology, especially a massive MIMO technology, a large-scale antenna array is configured at a transmit/receive end, so that a diversity gain in space domain can be implemented, to significantly increase the system capacity. In addition, an increase of the system capacity can reduce the communication latency. Therefore, the massive MIMO technology already becomes a key direction in evolution of the communication system. In the massive MIMO technology, a base station may simultaneously send data to a plurality of UEs by using a same time-frequency resource, that is, multi-user MIMO (multi-user MIMO, MU-MIMO), or simultaneously send a plurality of data streams to a same UE, that is, single-user MIMO (single-user MIMO, SU-MIMO). The data for the plurality of UEs or the plurality of data streams for the same UE are spatially multiplexed.

In a massive MIMO system, the base station needs to precode downlink data sent by the UE. The base station may implement spatial multiplexing (spatial multiplexing) by using a precoding technology, so that data between different UEs or data between different data streams of a same UE is isolated in space, so that interference between different UEs or between different data streams can be reduced, and a signal-to-interference-plus-noise ratio of a received signal on a UE end can be increased, and a downlink data transmission rate can be improved. When performing precoding, the base station needs to precode downlink data by using a precoding matrix. To obtain the precoding matrix, the base station needs to obtain CSI of a downlink channel, and determine the precoding matrix based on the CSI. However, in a currently widely used frequency division duplex (frequency division duplex, FDD)-based communication system, uplink and downlink channels have reciprocity, and a base station obtains downlink CSI with the need of a manner in which a UE performs uplink feedback. For example, the UE receives a downlink reference signal from the base station. Because the UE knows a sending sequence of the downlink reference signal, the UE may estimate (or measure), based on the received downlink reference signal, CSI of a downlink channel that the downlink reference signal passes through, and feed back the CSI obtained through measurement to the base station. Higher precision of the CSI fed back by the UE indicates more complete channel information that is fed back. A more accurate precoding matrix determined by the base station based on the CSI indicates better downlink spatial multiplexing performance, a higher signal-to-interference-plus-noise ratio of a signal subsequently received by the UE, and a higher system capacity. In an actual network deployment environment, the base station is usually planned based on many objective factors, such as budget and urban density. How to perform high-precision compression feedback on CSI in different environments is an important research topic. Current researches mainly focus on expecting to obtain a feature of the CSI based on an AI technology, in other words, according to a learning method, compressing and quantizing channel information, and feeding back the channel information to the base station. In this disclosure, the following solutions are provided:

In a solution, a single-sided model is set. In a design, a UE maintains a first model, and the first model is for compressing determined downlink channel information. For example, the first model is an encoding model. A base station side does not maintain a second model, and the second model may be for restoring compressed downlink channel information. In subsequent descriptions, an example in which the second model is a decoding model is used for description. For example, in an implementation, the UE determines a characteristic matrix H of a downlink channel based on a received downlink reference signal, preprocesses the characteristic matrix H of the downlink channel, and uses preprocessed data as an input of the encoding model, where an output of the encoding model is the compressed downlink channel information. Optionally, the compressed downlink channel information is quantized. Quantized information is sent to the base station. The compressed downlink channel information may be considered as a codeword most related to original channel information in a codebook, and an identifier of the codeword is sent to the base station. The base station may restore the downlink channel information based on the quantized information by using the codebook. For example, the information sent by the UE to the base station may be referred to as a CSI feedback.

In another design, a base station maintains a decoding model, and a UE does not maintain an encoding model. The UE may send CSI information according to a method of a non-AI model (for example, the 3GPP protocol). Optionally, the UE may compress downlink channel information by using a non-AI algorithm. The base station enables the CSI information that is fed back to pass through the decoding model, to restore the downlink channel information.

In another solution, a multilateral model is set. A UE maintains an encoding model, and a base station maintains a decoding model. The UE feeds back CSI information to the base station based on the encoding model. The base station restores downlink channel information based on the decoding model.

Optionally, the UE may maintain A encoding models based on a capability of the UE. The base station may maintain B decoding models based on a network capability. Both A and B are positive integers greater than or equal to 1. The encoding model and the decoding model may be obtained through AI training, and this is not limited to offline training or online training. An input dimension of the encoding model may be determined during training. The encoding model and the decoding model may be jointly trained, or may be separately trained. In a training process, a mean square error (mean square error, MSE) of minimized input data and output data may be used as a loss function for training, or a correlation between the input data and the output data may be used as a loss function for training. The input dimension of the encoding model is determined, and an output dimension of the decoding model is determined after information output by the encoding model passes through the decoding model. The input data is channel information, and the output data is restored channel information. Therefore, the encoding model and decoding model need to be used in a matching manner.

The input dimension of the encoding model includes a quantity of ports and an indexing manner of the ports. The indexing manner of the ports is related to a panel structure of the ports. The panel structure of the ports includes N1 columns and N2 rows. Polarization is dual-polarization. Therefore, the indexing manner of the ports is (N1, N2, 2), and the quantity of ports is N1*N2*2. When the encoding model and the decoding model need to be used in a matching manner, for example, when a corresponding indexing manner of ports in the input dimension of the encoding model is (N1, N2, 2), a corresponding indexing manner of ports in an output dimension of the corresponding selected decoding model also needs to satisfy (N1, N2, 2). For example, the UE maintains three encoding models, and corresponding indexing manners of ports in input dimensions of the three encoding models are respectively (16, 1, 2), (4, 4, 2), and (8, 2, 2). The base station maintains two decoding models, and indexing manners of ports in output dimensions of the two decoding models are respectively (4, 4, 2) and (8, 2, 2). In this case, only the encoding model of (8, 2, 2) and the decoding model of (8, 2, 2) can be used in a matching manner. This disclosure provides the following solutions for how to select an encoding model and a decoding model that are matched:

A UE reports a capability of an encoding model to a base station, and the base station performs determining based on the capability that is of the encoding model and that is reported by the UE. For example, when the UE supports or maintains only one encoding model, the base station may match a corresponding decoding model based on the encoding model reported by the UE. If the base station fails to match the decoding model, the base station sends a piece of signaling to the UE, to notify the UE that model matching fails. Alternatively, if the base station successfully matches the decoding model, the base station may send a piece of signaling to the UE, to notify the UE that model matching succeeds. This process is optional. For example, the UE may consider, by default, that the matching succeeds, when no signaling indicating that the matching fails is received. Alternatively, when the UE supports or maintains a plurality of encoding models, when no decoding model is matched based on the plurality of encoding models reported by the UE, the base station may send a piece of signaling to the UE, to notify the UE that model matching fails; or when the base station successfully matches a model, the base station delivers a piece of signaling to the UE, to notify the UE of a successfully matched encoding model. Optionally, the base station may decide an encoding model for matching, based on factors such as a computing capability and indexing of ports for a reference signal.

In a possible implementation, a maximum quantity of the ports for the reference signal supported by a system is 32 ports. To adapt to ports for another possible reference signal, the UE may maintain three encoding models, and indexing manners of ports in input dimensions of the three encoding models may be respectively (16, 1, 2), (4, 4, 2), or (8, 2, 2). Which encoding model in the three encoding models is specifically used by the UE to compress downlink channel information mainly depends on a decision of the base station. For a decision-making process of the base station, refer to the foregoing descriptions in which the base station selects an encoding model and a decoding model that match each other. Essentially, regardless of which encoding model in the three encoding models is selected by the UE, quantities of ports included in the input dimensions in the three encoding models are all 32, and numbers of the 32 ports may be 0 to 31. Subsequently, channel estimation is performed on a downlink reference signal, data of m ports is determined, and the data of the m ports is respectively input into an input corresponding to the 32 ports of the encoding model according to a mapping rule. In other words, regardless of an encoding model of an indexing manner that is of ports and that is selected by the UE, provided that an input dimension of the encoding model includes 32 ports, a process of mapping data corresponding to the m ports for the reference signal to the 32 ports is similar. In this way, a value relationship between 32 and m is mainly considered subsequently.

In a design, the UE may perform channel estimation on the received downlink reference signal, to obtain downlink channel information H, where H includes the data of the m ports for the reference signal. When a value of m is less than 32, m ports may be selected, in the foregoing manner and for inputting, from 32 ports in an input dimension of a first encoding model (where the first encoding model may be the model that is used for channel information compression and that is selected from the three encoding models supported by the UE), and preset data or replicated data of the data of the m ports is input into other ports. This is not limited. The foregoing process may alternatively be described as follows: A submodel is obtained from the first encoding model through division, and a quantity of ports included in an input of the submodel is m. Optionally, indexing and distribution of the ports in the input of the submodel may be the same as indexing and distribution of the m ports for the reference signal.

Alternatively, in another possible implementation, with development of technologies, a quantity of ports for the reference signal may not be limited to 32, and 64 ports, 128 ports, or the like may occur. An encoding model on a UE side is not to be extended without limitation as a quantity of ports for a reference signal increases. A larger quantity of ports in an input of the encoding model indicates a larger quantity of parameters of the encoding model, more complex calculation of the UE side, and disadvantages to the UE and the base station. Therefore, extension of an encoding model supported by a protocol is mainly considered, to meet a requirement of a large quantity of ports for a reference signal. For example, an input dimension of an encoding model is designed to include 32 ports. Subsequently, 64 ports, 128 ports, or the like of a reference signal may be divided into a plurality of subpanels, and each subpanel includes 32 ports. Optionally, indexing and distribution of the 32 ports included in each subpanel are the same as indexing and distribution of the 32 ports in the input dimension of the encoding model. Data included in each subpanel is respectively input into the 32 ports of the encoding model. An output of the encoding model or processed data that is output is sent to the base station. The base station integrates the received data according to a specific rule.

In a wireless network, a UE is not always stationary, and cell switching or the like occurs in a moving process. In this case, the UE enters a new cell, and both a quantity of ports of a base station serving the UE and indexing of the ports change. Alternatively, the UE initially accesses different base stations at different locations. This results in a different quantity of ports of a base station serving the UE and different indexing of the ports. If the quantity of ports and the indexing of the ports of the base station serving the UE change or there is the different quantity of ports of the base station serving the UE and the different indexing of the ports, a different port quantity of ports for a reference signal and different indexing of the ports are caused. However, in this disclosure, an encoding model for each port form of a reference signal does not need to be set, and minimized encoding model storage is enabled. Via a limited quantity of encoding models or even a single encoding model, processing of all reference signals in a protocol and a subsequent extension design can be almost completely met, so that model training and storage overheads are reduced.

For example, in the procedure in FIG. 7, the first device is a UE, the second device is a base station, the first model is an encoding model, the second model is a decoding model, the reference signal is a CSI-RS, and the second information is a CSI feedback. As shown in FIG. 18, a procedure is provided, and may include the following steps.

Step 1800: The UE supports or maintains A encoding models, and the base station supports or maintains B decoding models, where both A and B are natural numbers, and A and B are not both zero.

An entity for training the encoding model and the decoding model may be a base station, a UE, another third-party device, or the like. This is not limited. For example, if the base station trains the encoding model and the decoding model, the base station may send a trained encoding model to the UE, and the UE may directly use the encoding model sent by the base station, or may adjust a parameter of the encoding model and then use an adjusted model. Alternatively, if the UE trains the encoding model and the decoding model, the UE uploads a trained decoding model to the base station. Alternatively, if a third-party device trains the encoding model and the decoding model, the UE and the base station may respectively download the encoding model and the decoding model from the third-party device. Optionally, the encoding model and the decoding model need to be used in a matching manner. For a process in which the UE and the base station may negotiate an encoding model and a decoding model to be used, refer to the foregoing descriptions. Details are not described again.

Step 1801: The base station sends CSI-RS configuration information and the CSI-RS to the UE.

When receiving the CSI-RS configuration information, the UE may receive the CSI-RS from the base station based on a configuration of the configuration information.

Step 1802: The UE determines channel information H based on the CSI-RS, and determines quantized information after preprocessing, encoding, quantization, and the like are performed on the channel information H.

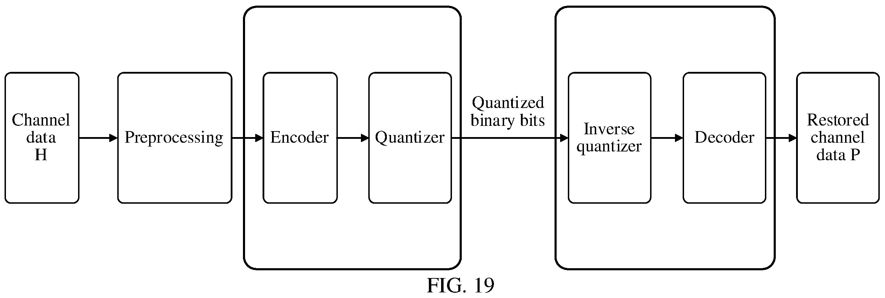

As shown in FIG. 19, the UE performs channel estimation on the CSI-RS. Optionally, the information obtained through channel estimation is preprocessed. A preprocessing process may include singular value decomposition (singular value decomposition, SVD), discrete Fourier transform (discrete Fourier transform, DFT), and the like. A dimension of the channel information before preprocessing includes (nTx, nRx, nSubband), and a dimension of channel information after preprocessing includes (nTx, nSubband). This disclosure mainly considers self-adaptation to a port nTx, which is also referred to as a port for a reference signal, of the base station and a port included in an input dimension of an encoding model. In the foregoing design, it is set that a quantity of ports for the reference signal is m, and the ports are referred to as m ports for the reference signal. The input dimension of the encoding model includes n ports, and the ports are referred to as n ports of the encoding model. In the foregoing design, two cases in which x is greater than n and x is less than n are specifically used as examples, and corresponding solutions are respectively provided. Regardless of a solution that is used, data of the m ports for the reference signal may be mapped to the encoding model, and an output of the encoding model may be a floating-point matrix. After quantization, the floating-point matrix is transformed into binary bits.

Step 1803: The UE sends the quantized information to the base station, where the quantized information may be referred to as the CSI feedback.

Step 1804: The base station performs processing such as dequantization and decoding on the quantized information, to restore estimated channel information P.

As shown in FIG. 19, the base station may dequantize and decode the received quantized information. For example, the base station inputs the quantized information into an inverse quantizer, to obtain a corresponding floating-point matrix. The floating-point matrix is mapped to a decoder, and an output of the decoder includes information about x ports. Channel data P is restored based on the foregoing matching between the x ports and the m ports for the reference signal. The restored information data P may be the same as or slightly different from the information data H estimated by the UE.

In this disclosure, data on ports for a reference signal is mapped to an encoding model according to a self-adaptation method, so that minimized model storage is enabled, and requirements of all scenarios of the ports for the reference signal can be almost satisfied via a limited quantity of models.

It may be understood that, to implement functions in the foregoing methods, the UE and the base station include corresponding hardware structures and/or software modules for performing the functions. A person skilled in the art should be easily aware that, with reference to units and method steps in the examples described in this disclosure, this disclosure can be implemented by hardware or a combination of hardware and computer software. Whether a function is performed by hardware or hardware driven by computer software depends on particular application scenarios and design constraint conditions of the technical solutions.

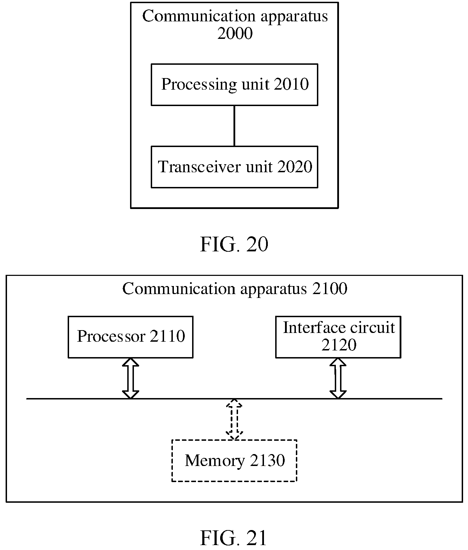

FIG. 20 and FIG. 21 are diagrams of structures of possible apparatuses according to this disclosure. These communication apparatuses may be configured to implement functions of the UE or the base station in the foregoing methods. Therefore, beneficial effects of the foregoing methods can also be achieved.

As shown in FIG. 20, a communication apparatus 2000 includes a processing unit 2010 and a transceiver unit 2020. The communication apparatus 2000 is configured to implement functions of the base station or the UE in the foregoing methods.

When the communication apparatus 2000 is configured to implement functions of the UE or the base station in the foregoing methods, the transceiver unit 2020 is configured to receive a reference signal; and the processing unit 2010 is configured to: determine first information based on a received reference signal, where the first information includes data of m ports for the reference signal; and map the data of the m ports to an input of a first model based on a correspondence between the m ports and n ports in an input dimension of the first model, to obtain an output of the first model, where both m and n are integers greater than or equal to 1, and m and n are not equal.

When the communication apparatus 2000 is configured to implement functions of the base station in the foregoing methods, the transceiver unit 2020 is configured to receive second information from a terminal device, and the processing unit 2010 is configured to: determine third information based on a second model and the second information; and process the third information based on a correspondence between m ports for a downlink reference signal and x ports in an output dimension of the second model, to determine first information, where the first information includes data of the m ports, both m and x are integers greater than or equal to 1, and m and x are not equal.

For more detailed descriptions about the processing unit 2010 and the transceiver unit 2020, directly refer to related descriptions in the foregoing methods. Details are not described herein again.

As shown in FIG. 21, a communication apparatus 2100 includes a processor 2110 and an interface circuit 2120. The processor 2110 and the interface circuit 2120 are coupled to each other. It may be understood that the interface circuit 2120 may be a transceiver, an input/output interface, a pin, or the like. Optionally, the communication apparatus 2100 may further include a memory 2130, configured to: store instructions executed by the processor 2110, or store input data required by the processor 2110 to run the instructions, or store data generated after the processor 2110 runs the instructions.

When the communication apparatus 2100 is configured to implement the foregoing methods, the processor 2110 is configured to implement the functions of the processing unit 2010, and the interface circuit 2120 is configured to implement the functions of the transceiver unit 2020.

When the foregoing communication apparatus is a chip used in a terminal, the chip in the terminal implements functions of the terminal in the foregoing method embodiments. The chip in the terminal receives information from another module (for example, a radio frequency module or an antenna) in the terminal, where the information is sent by a base station to the terminal; or the chip in the terminal sends information to another module (for example, a radio frequency module or an antenna) in the terminal, where the information is sent by the terminal to a base station.

When the foregoing communication apparatus is a module used in a base station, the base station module implements functions of the base station in the foregoing method embodiments. The module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that the processor in this disclosure may be a central processing unit (central processing unit, CPU), or may be another general-purpose processor, a digital signal processor (digital signal processor, DSP), or an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The memory in this disclosure may be a random access memory, a flash memory, a read-only memory, a programmable read-only memory, an erasable programmable read-only memory, an electrically erasable programmable read-only memory, a register, a hard disk drive, a removable hard disk drive, a CD-ROM, or a storage medium of any other form well-known in the art.

For example, the storage medium is coupled to the processor, so that the processor can read information from the storage medium and write information into the storage medium. The storage medium may alternatively be a component of the processor. The processor and the storage medium may be located in an ASIC. In addition, the ASIC may be located in a base station or a terminal. Certainly, the processor and the storage medium may exist in the base station or the terminal as discrete components.

Methods in this disclosure may be wholly or partially implemented by using software, hardware, firmware, or any combination thereof. When software is used to implement the embodiments, all or some of embodiments may be implemented in a form of a computer program product. The computer program product includes one or more computer programs or instructions. When the computer programs or instructions are loaded and executed on a computer, procedures or functions in this disclosure are all or partially executed. The computer may be a general-purpose computer, a dedicated computer, a computer network, a network device, a user equipment, a core network device, OAM, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In this disclosure, unless otherwise stated or there is a logic conflict, terms and/or descriptions in different embodiments are consistent and may be mutually referenced, and technical features in different embodiments may be combined based on an internal logical relationship thereof, to form a new embodiment.

In this disclosure, "at least one" means one or more, and "a plurality of" means two or more than two. "And/or" describes an association relationship between associated objects, and represents that three relationships may exist. For example, A and/or B may represent the following cases: A exists alone, both A and B exist, and B exists alone, where A and B may be singular or plural. In the text descriptions of this disclosure, the character "/" generally indicates an "or" relationship between the associated objects. In a formula in this disclosure, the character "/" indicates a "division" relationship between the associated objects. "Including at least one of A, B, or C" may indicate: including A; including B; including C; including A and B; including A and C; including B and C; and including A, B, and C.

It may be understood that various numerals used in this disclosure are merely differentiated for ease of description, but are not used to limit the scope of this disclosure. Sequence numbers of the foregoing processes do not mean an execution sequence, and the execution sequence of the processes should be determined based on functions and internal logic of the processes.

## Claims

1. A model application method, comprising:

    determining first information based on a received reference signal, wherein the first information comprises data of m ports for the reference signal; and
    mapping the data of the m ports to an input of a first model based on a correspondence between the m ports and n ports in an input dimension of the first model, to obtain an output of the first model, wherein both m and n are integers greater than or equal to 1, and m and n are not equal.

2. The method according to claim 1, wherein the reference signal is a downlink reference signal, the output of the first model is for determining second information, and the method further comprises: sending the second information to a network device.

3. The method according to claim 1 or 2, wherein the mapping the data of the m ports to an input of a first model based on a correspondence between the m ports and n ports in an input dimension of the first model comprises:

    determining a first target port in the n ports based on the correspondence between the m ports and the n ports, wherein a quantity of first target ports is m; and
    inputting the data of the m ports into an input corresponding to the first target port of the first model.

4. The method according to any one of claims 1 to 3, wherein the m ports are indexed in a matrix manner, comprise M1 columns and M2 rows, and use dual polarization directions, and the m ports are represented as (M1, M2, 2); the n ports are indexed in a matrix manner, comprise N1 columns and N2 rows, and use dual polarization directions, and the n ports are represented as (N1, N2, 2), wherein M1, M2, N1, and N2 are all integers greater than or equal to 1; and the correspondence between the m ports and the n ports satisfies the following:

    in a polarization direction 1: ports (i*M2 to (i+1)*M2-1) in the m ports correspond to ports (i*N2 to i*N2+M2-1) in the n ports; and
    in a polarization direction 2: ports (i*M2+M1*M2 to (i+1)*M2-1+M1*M2) in the m ports correspond to ports (i*N2+N1*N2 to i*N2+M2-1+N1*N2) in the n ports, wherein
    i is an integer greater than or equal to 0 and less than or equal to M1-1.

5. The method according to claim 3 or 4, wherein an input of a port other than the first target port in the first model is preset data, or replicated data of the data of the m ports.

6. The method according to any one of claims 3 to 5, wherein the first target port comprises a port 0.

7. The method according to any one of claims 3 to 6, wherein a quantity of ports in each row of the n ports is greater than or equal to a quantity of ports in each row of the m ports, and a quantity of ports in each column of the n ports is greater than or equal to a quantity of ports in each column of the m ports.

8. The method according to claim 1 or 2, wherein the mapping the data of the m ports to an input of a first model based on a correspondence between the m ports and n ports in an input dimension of the first model comprises:

    determining Y port sets based on the m ports and the n ports, wherein Y is an integer greater than 1, and at least one of the Y port sets comprises n ports; and
    for the port set that comprises the n ports, inputting data corresponding to the n ports comprised in the port set into
    an input corresponding to the n ports of the first model.

9. The method according to claim 8, wherein the m ports are indexed in a matrix manner, comprise M1 columns and M2 rows, and use dual polarization directions, and the m ports are represented as (M1, M2, 2); the n ports are indexed in a matrix manner, comprise N1 columns and N2 rows, and use dual polarization directions, and the n ports are represented as (N1, N2, 2), wherein M1, M2, N1, and N2 are all integers greater than or equal to 1; and for a port set k in the Y port sets, wherein
k is an integer greater than or equal to 0 and less than or equal to Y-1, the correspondence between the m ports and the n ports satisfies the following:

    in a polarization direction 1: ports (i*M2+k*N2 to i*M2+k*N2+N2-1) in the m ports correspond to ports (i*N2 to i*N2+N2-1) in the n ports; and
    in a polarization direction 2: ports (i*M2+k*N2+M1*M2 to i*M2+k*N2+N2-1+M1*M2) in the m ports correspond to ports (i*N2+N1*N2 to i*N2+N2-1+N1*N2) in the n ports, wherein
    i is an integer greater than or equal to 0 and less than or equal to M1-1.

10. The method according to claim 8, wherein the m ports are indexed in a matrix manner, comprise M1 columns and M2 rows, and use dual polarization directions, and the m ports are represented as (M1, M2, 2); the n ports are indexed in a matrix manner, comprise N1 columns and N2 rows, and use dual polarization directions, and the n ports are represented as (N1, N2, 2); and for a port set k in the Y port sets, wherein k is an integer greater than or equal to 0 and less than or equal to Y-1, the correspondence between the m ports and the n ports satisfies the following:

in a polarization direction 1: ports (i*M2+k*N1 to i*M2+k*N1+M2-1) in the m ports correspond to ports (i*N2 to i*N2+M2-1) in the n ports; and
in a polarization direction 2: ports (i*M2+k*N1+M1*M2 to i*M2+k*N1+M2-1+M1*M2) in the m ports correspond to ports (i*N2+N1*N2 to i*N2+M2-1+N1*N2) in the n ports, wherein i is an integer greater than or equal to 0 and less than or equal to M1-1.

11. The method according to any one of claims 8 to 10, further comprising: sending identification information of the port sets to the network device.

12. The method according to any one of claims 8 to 11, wherein a quantity of ports in each row of the n ports is less than or equal to a quantity of ports in each row of the m ports, and a quantity of ports in each column of the n ports is less than or equal to a quantity of ports in each column of the m ports.

13. A model application method, comprising:

receiving second information from a terminal device;
determining third information based on a second model and the second information; and
processing the third information based on a correspondence between m ports for a downlink reference signal and x ports in an output dimension of the second model, to determine first information, wherein the first information comprises data of the m ports, both m and x are integers greater than or equal to 1, and m and x are not equal.

14. The method according to claim 13, wherein the processing the third information based on a correspondence between m ports for a downlink reference signal and x ports in an output dimension of the second model, to determine first information comprises:

determining a second target port in the x ports based on the correspondence between the m ports and the x ports; and
determining the first information based on data that corresponds to the second target port and that is in the third information.

15. The method according to claim 14, wherein the second target port comprises a port 0.

16. The method according to claim 14 or 15, wherein a quantity of ports in each row of the x ports is greater than or equal to a quantity of ports in each row of the m ports, and a quantity of ports in each column of the x ports is greater than or equal to a quantity of ports in each column of the m ports.

17. The method according to claim 13, wherein Y pieces of second information are received from the terminal device, to determine Y pieces of third information, Y is an integer greater than 1, and the processing the third information based on a correspondence between m ports for a downlink reference signal and x ports in an output dimension of the second model, to determine first information comprises:
concatenating the Y pieces of third information based on the correspondence between the m ports and the x ports, to determine the first information.

18. The method according to claim 17, further comprising: receiving identification information of port sets corresponding to the second information from the terminal device.

19. The method according to claim 17 or 18, wherein a quantity of ports in each row of the x ports is less than or equal to a quantity of ports in each row of the m ports, and a quantity of ports in each column of the x ports is less than or equal to a quantity of ports in each column of the m ports.

20. A communication apparatus, comprising a unit configured to implement the method according to any one of claims 1 to 12.

21. A communication apparatus, comprising a processor and a communication interface, wherein the processor is configured to implement the method according to any one of claims 1 to 12.

22. A communication apparatus, comprising a unit configured to implement the method according to any one of claims 13 to 19.

23. A communication apparatus, comprising a processor and a communication interface, wherein the processor is configured to implement the method according to any one of claims 13 to 19.

24. A communication system, comprising the communication apparatus according to claim 20 or 21 and the communication apparatus according to claim 22 or 23.

25. A computer-readable storage medium, wherein the computer-readable storage medium stores instructions; and when the instructions are run on a computer, the computer is enabled to perform the method according to any one of claims 1 to 12 or the method according to any one of claims 13 to 19.

26. A computer program product, comprising instructions, wherein when the instructions are run on a computer, the computer is enabled to perform the method according to any one of claims 1 to 12 or the method according to any one of claims 13 to 19.

27. A chip system, comprising a processor, configured to implement the method according to any one of claims 1 to 12, or configured to implement the method according to any one of claims 13 to 19.

28. The system according to claim 27, further comprising a memory.

29. The system according to claim 27 or 28, wherein the chip system comprises a chip, or comprises a chip and another discrete device.

FIG. 1

FIG. 2

FIG. 3

FIG. 4

FIG. 5

FIG. 6

```
┌──────────┐                                                    ┌──────────┐
│  First   │                                                    │  Second  │
│  device  │                                                    │  device  │
└────┬─────┘                                                    └────┬─────┘
     │                                                               │
     │◄──────────────── 701: Reference signal ──────────────────────│
     │                                                               │
┌────┴────────────────────────┐                                     │
│ 701: The first device        │                                     │
│ determines first             │                                     │
│ information based on the     │                                     │
│ received reference signal,   │                                     │
│ where the first information  │                                     │
│ includes data of m ports for │                                     │
│ the reference signal         │                                     │
└────┬─────────────────────────┘                                     │
┌────┴─────────────────────────┐                                    │
│ 702: The first device maps   │                                     │
│ the data of the m ports to   │                                     │
│ an input of a first model    │                                     │
│ based on a correspondence    │                                     │
│ between the m ports and n    │                                     │
│ ports in an input dimension  │                                     │
│ of the first model, to       │                                     │
│ obtain an output of the      │                                     │
│ first model, where both m    │                                     │
│ and n are integers greater   │                                     │
│ than or equal to 1, and m    │                                     │
│ and n are not equal          │                                     │
└────┬─────────────────────────┘                                    │
     │     703: Second information, where the                        │
     ├─ ─ ─ ─ ─  second information is determined  ─ ─ ─ ─ ─►       │
     │      based on the output of the first model                   │
     │                                                               │
```

FIG. 7

FIG. 8

FIG. 9

**FIG. 10**

**FIG. 11**

**FIG. 12**

FIG. 13

FIG. 14

EP 4 525 391 A1

64
ports

Subpanel 2

3     35 7                                                                      31        63

2     34 6                                                                      30        62

Subpanel 1

1     33 5                                                                      29        61

0     32 4                                                                      28        60

32
ports

1     17 3                                                                      15        31

0     16 2                                                                      14        30

FIG. 15

FIG. 16

Perform phase adjustment
on data restored by the
two subpanels

32 ports ⇨ Subpanel 1

Finally restored
channel
information

32 ports ⇨ Subpanel 2

64 ports for a reference signal

FIG. 17

UE                                                    Base station

1800: The UE maintains A encoding models, and the base station
maintains B decoding models

1801: Send CSI-RS configuration
information and
a CSI-RS

1802: The UE determines channel
information H based on the CSI-RS,
and determines quantized information
after preprocessing, encoding,
quantization, and the like are performed
on the channel information H

1803: Send the quantized
information

1804: The base station performs
processing such as dequantization
and decoding on the quantized
information, to restore estimated
channel information P

FIG. 18

| Channel data H | → | Preprocessing | → | Encoder | → | Quantizer | Quantized binary bits | Inverse quantizer | → | Decoder | → | Restored channel data P |

FIG. 19

Communication apparatus
2000

Processing unit 2010

Transceiver unit 2020

FIG. 20

Communication apparatus 2100

Processor 2110

Interface circuit
2120

Memory 2130

FIG. 21

## INTERNATIONAL SEARCH REPORT

| International application No. |
|---|
| **PCT/CN2023/096197** |

**A. CLASSIFICATION OF SUBJECT MATTER**

H04L41/14(2022.01)i; H04B7/0413(2017.01)i

According to International Patent Classification (IPC) or to both national classification and IPC

**B. FIELDS SEARCHED**

Minimum documentation searched (classification system followed by classification symbols)

IPC: H04L; H04B; H04W

Documentation searched other than minimum documentation to the extent that such documents are included in the fields searched

Electronic data base consulted during the international search (name of data base and, where practicable, search terms used)

CNTXT; CNKI; ENTXTC; ENTXT; 3GPP; IEEE: 一个, 单个, 统一, 同一, 相同, 固定, 通用, 公共, 模型, 人工智能, 机器训练, 机器学习, 不同, 多个, 端口, 参考信号, 数量, 维度, 输入, 输出, 尺寸, 形状, one, same, uniform, fix, single, common, model, intelligent, training, learning, different, multiple, adaptive, port, reference signal, dimension, number, input, output, size, shape, CSI-RS, AI, ML

**C. DOCUMENTS CONSIDERED TO BE RELEVANT**

| Category* | Citation of document, with indication, where appropriate, of the relevant passages | Relevant to claim No. |
|---|---|---|
| X | VIVO. "R1-2203551 Other aspects on AI/ML for CSI feedback enhancement" *3GPP TSG RAN WG1 #109-e*, 29 April 2022 (2022-04-29), sections 1-3 | 1-3, 13, 14, 20-29 |
| A | VIVO. "R1-2203550 Evaluation on AI/ML for CSI feedback enhancement" *3GPP TSG RAN WG1 #109-e*, 29 April 2022 (2022-04-29), entire document | 1-29 |
| A | CATT. "R1-2203452 Discussion on other aspects on AI/ML for CSI feedback" *3GPP TSG RAN WG1 #109-e*, 29 April 2022 (2022-04-29), entire document | 1-29 |
| A | CN 113922936 A (CHINA ACADEMY OF INFORMATION AND COMMUNICATIONS TECHNOLOGY) 11 January 2022 (2022-01-11) entire document | 1-29 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 August 2023** | **30 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/096197**

| C. | DOCUMENTS CONSIDERED TO BE RELEVANT | | |
|---|---|---|---|
| Category* | Citation of document, with indication, where appropriate, of the relevant passages | | Relevant to claim No. |
| A | CN 113872652 A (NANJING UNIVERSITY OF POSTS AND TELECOMMUNICATIONS) 31 December 2021 (2021-12-31) entire document | | 1-29 |
| A | US 2020366326 A1 (JASSAL AMAN et al.) 19 November 2020 (2020-11-19) entire document | | 1-29 |
| A | US 2021195462 A1 (QUALCOMM INC.) 24 June 2021 (2021-06-24) entire document | | 1-29 |
| A | WO 2021223504 A1 (ZTE CORP.) 11 November 2021 (2021-11-11) entire document | | 1-29 |

Form PCT/ISA/210 (second sheet) (July 2022)

## INTERNATIONAL SEARCH REPORT
### Information on patent family members

International application No.

**PCT/CN2023/096197**

| Patent document cited in search report | | | Publication date (day/month/year) | Patent family member(s) | | | Publication date (day/month/year) |
|---|---|---|---|---|---|---|---|
| CN | 113922936 | A | 11 January 2022 | None | | | |
| CN | 113872652 | A | 31 December 2021 | None | | | |
| US | 2020366326 | A1 | 19 November 2020 | WO | 2020228822 | A1 | 19 November 2020 |
| | | | | US | 10992331 | B2 | 27 April 2021 |
| US | 2021195462 | A1 | 24 June 2021 | US | 11595847 | B2 | 28 February 2023 |
| WO | 2021223504 | A1 | 11 November 2021 | US | 2023179451 | A1 | 08 June 2023 |
| | | | | EP | 4149067 | A1 | 15 March 2023 |
| | | | | CN | 111901258 | A | 06 November 2020 |

Form PCT/ISA/210 (patent family annex) (July 2022)

**EP 4 525 391 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210612064